(19) Europäisches Patentamt
European Patent Office
Office européen des brevets

(11) EP 1 007 579 B1

(12) FASCICULE DE BREVET EUROPEEN

(45) Date de publication et mention de la délivrance du brevet: **04.06.2003 Bulletin 2003/23**

(21) Numéro de dépôt: **98942794.3**

(22) Date de dépôt: **27.08.1998**

(51) Int Cl.[7]: **C08G 18/70**, C08G 18/80

(86) Numéro de dépôt international: **PCT/FR98/01862**

(87) Numéro de publication internationale: **WO 99/010402 (04.03.1999 Gazette 1999/09)**

# (54) PROCEDE DE MASQUAGE EN EMULSION DE POLYISOCYANATES

VERFAHREN ZUR MASKIERUNG VON IN EMULSION VORLIEGENDEN POLYISOCYANATEN

METHOD FOR MASKING POLYISOCYANATES IN EMULSION

(84) Etats contractants désignés:
**AT BE CH CY DE DK ES FI FR GB GR IE IT LI LU MC NL PT SE**

(30) Priorité: **27.08.1997 FR 9710716**
**27.08.1997 FR 9710717**
**07.11.1997 FR 9714059**

(43) Date de publication de la demande: **14.06.2000 Bulletin 2000/24**

(73) Titulaire: **RHODIA CHIMIE**
**92408 Courbevoie Cédex (FR)**

(72) Inventeurs:
- **BERNARD, Jean-Marie**
  **69440 Mornant (FR)**
- **CORBET, Jean-Pierre**
  **F-78230 Le Pecq (FR)**
- **NABAVI, Minou**
  **F-75014 Paris (FR)**
- **GALY-JAMMOU, Philippe**
  **F-75014 Paris (FR)**
- **REVELANT, Denis**
  **F-69740 Genas (FR)**

(74) Mandataire: **Jacobson, Claude et al**
**Cabinet Lavoix**
**2, Place d'Estienne d'Orves**
**75441 Paris Cedex 09 (FR)**

(56) Documents cités:
**EP-A- 0 004 927**
**EP-A- 0 367 667**
**EP-A- 0 524 511**
**EP-A- 0 566 953**
**WO-A-94/22935**
**WO-A-97/12924**
**WO-A-97/31960**
**US-A- 4 396 738**
**US-A- 5 300 556**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet un procédé de synthèse en émulsion de (poly)isocyanates masqués, les émulsions ainsi obtenues, leur utilisation en vue de faire des compositions utiles pour le revêtement de surface et les revêtements ainsi obtenus.

Pour mieux comprendre l'invention, il a paru opportun de faire les rappels suivants.

Dans la présente description, les caractéristiques de granulométrie font souvent référence à des notations du type $d_n$ où n est un nombre de 1 à 99. Cette notation est bien connue dans de nombreux domaines techniques, mais est un peu plus rare en chimie, aussi peut-il être utile d'en rappeler la signification. Cette notation représente la taille de particule telle que n % (en poids, ou plus exactement en masse), des particules soit inférieur ou égal à ladite taille.

Dans la suite de la description, on utilisera l'indice de potydispersité, lequel est défini comme

$$I = (d_{90}-d_{10})/d_{50}$$

Dans l'activité des peintures et des vernis, on utilise largement les diisocyanates notamment les alcoylènes diisocyanates (notamment ceux vendus sous la marque Tolonate®) et leurs dérivés de type biuret ou leurs trimères.

Toutefois, parmi les problèmes qui restent à ce jour incomplètement résolus, l'un des plus lancinants reste l'utilisation de solvant organique, dont la présence est réputée toxique et néfaste pour l'environnement.

Le plus souvent, pour obtenir des films de peintures ou de vernis en évitant ou en réduisant l'usage de solvant (s), on réalise la dispersion de deux principaux composants, une émulsion contenant l'isocyanate qui peut être masqué et une dispersion de polyol.

Le mélange des dispersions pouvant également contenir des pigments et des charges est alors déposé sur un support sous forme d'un film à l'aide des techniques classiques de mise en oeuvre des peintures industrielles. Lorsque la préparation contient des isocyanates masqués (on utilise parfois le vocable de bloqués), l'ensemble film plus support est cuit à une température suffisante pour assurer la libération des fonctions isocyanates et la condensation de celles-ci avec des groupements à hydrogène réactif, le plus souvent les hydroxyles des particules de polyol.

L'utilisation de solvants organiques est de plus en plus souvent critiquée par les autorités en charge de la sécurité du travail, car ces solvants, ou du moins certains d'entre eux, sont réputés toxiques ou chronotoxiques. C'est la raison pour laquelle on essaye de développer de plus en plus des techniques qui réduisent l'usage des solvants, voire se substituent aux techniques en milieu solvant pour pallier les inconvénients afférents aux solvants.

Une des solutions les plus souvent utilisées réside dans l'utilisation d'émulsions ou de dispersions dans l'eau. En raison de la réactivité de l'eau avec les isocyanates, cette solution est surtout utilisée pour les isocyanates masqués.

Jusqu'à ce jour, la préparation des émulsions ou de dispersions était à la fois longue et dispendieuse. Elle mettait souvent en jeu une grande quantité de solvants, ce qui revient à déplacer l'usage de solvants et non à le réduire.

La mise en émulsion est elle-même souvent difficile et a conduit à mettre au point des techniques spécifiques pour obtenir des émulsions physiquement stables (voir notamment la demande de brevet PCT N° PCT/FR94/00353 publiée sous le N° WO 94/22935).

Dans la demande de brevet européenne n° 524.511, il est décrit une technique qui consiste à mettre en émulsion l'isocyanate et de mener la réaction de masquage [par le produit désigné par l'acronyme anglo-saxon "MEKO" (Méthyléthylcétoxime ou plus exactement butanoxime-2)] sur l'émulsion ainsi formée.

Dans cette demande, il est indiqué que l'oxime est plus réactive que l'eau vis-à-vis des fonctions isocyanates. Cette assertion constitue un enseignement ambigu et très incomplet, car les études de la Demanderesse ont montré que la réaction avec l'eau était thermodynamiquement au moins aussi favorable (et probablement beaucoup plus), que le frein était d'ordre cinétique et qu'un grand nombre de conditions usuelles conduisait à un fort dégagement gazeux (bioxyde de carbone, ou gaz carbonique).

Ainsi parmi les paramètres conduisant, ou concourant, à un risque élevé de réaction parasite avec l'eau, on peut citer une faible teneur en eau, une température supérieure à l'ambiante, la présence d'agent tensioactif ionique, une agitation à fort cisaillement, c'est-à-dire renouvelant la surface des particules de l'émulsion.

Le résultat obtenu non seulement n'est pas entièrement convaincant, le rendement en masquage effectif n'est en général que de l'ordre de 90 % (soit donc une perte de 10 % de fonction isocyanate), mais encore, il est acquis au prix d'inconvénients importants, à savoir une cinétique lente, la mise en oeuvre d'un agent tensioactif en quantité énorme (50 % en masse), lequel tensioactif est à la fois nonionique et greffé.

En outre, il convient de signaler que la réactivité des isocyanates aromatiques (c'est-à-dire dont la fonction isocyanate est directement greffée sur un noyau aromatique) diffère assez sensiblement de celle des isocyanates aliphatiques.

C'est pourquoi un des buts de la présente invention est de fournir un procédé qui permette de réaliser en une

étape le masquage des fonctions isocyanates et la mise en émulsion aqueuse du ou des produits obtenus.

Un autre but de la présente invention est de fournir un procédé du type précédent qui n'utilise que peu ou pas de solvant.

Un autre but de la présente invention est de fournir un procédé du type précédent qui utilise des agents tensioactifs en proportion relativement faible, avantageusement au plus environ 20 %, de préférence au plus environ 15 %, plus préférentiellement au plus environ 10 %, de manière plus préférée au plus environ 8 % en masse par rapport à la masse de la composition isocyanate.

Un autre but de la présente invention est de foumir une composition susceptible d'être obtenue par un procédé du type précédent, composition dont la teneur en solvant soit inférieure à 1/5, avantageusement à 1/10, en masse de ladite composition.

Un autre but de la présente invention est de fournir une émulsion susceptible d'être obtenue par un procédé du type précédent qui présente une teneur en eau (c'est-à-dire eau plus agents tensioactifs non greffés) exprimée en masse d'au plus 60 %, avantageusement au plus 50 % ; de préférence au plus 40 %.

Un autre but de la présente invention est de fournir une émulsion du type précédent qui ne perturbe pas les opérations ultérieures préalables au revêtement.

Ces buts et d'autres qui apparaîtront par la suite sont atteints au moyen d'un procédé comportant l'étape consistant à :

a) mettre en contact une composition isocyanate présentant des fonctions isocyanates libres avec, au moins un agent masquant A en présence d'un tensioactif B et d'une phase aqueuse, ladite composition isocyanate étant ajoutée progressivement sur un pied comportant au moins une partie de la phase aqueuse et au moins une partie de l'agent de masquage.

De manière préférée, le procédé comporte également mais non nécessairement les étapes suivantes :

b) soumettre le mélange obtenu en a) à un cisaillement (gradient de vitesse) supérieur à 1 000 $s^{-1}$ de préférence supérieur à 20 000 $s^{-1}$ et inférieur à 1 000 000 $s^{-1}$, de préférence inférieur à 200 000 $s^{-1}$,et

c) répéter l'étape b), éventuellement après avoir répété l'étape a) jusqu'à obtention d'une émulsion stable dont les particules présentent un diamètre de Sauter supérieur à 0,1 µm, de préférence 0,2 µm et inférieur à 5 µm, de préférence inférieur à 2 µm et une largeur de dispersion (L) inférieure à 5 µm.

Le diamètre de Sauter est défini comme étant la taille telle que $\sum n_i d_i^3 / \sum n_i d_i^2$ des particules soient inférieurs ou égaux à ladite taille, $n_i$ étant le nombre de particules et $d_i$ étant le diamètre correspondant

La largeur de dispersion (L) est définie par :

$L = d_{90} - d_{10}$, $d_{90}$ et $d_{10}$ étant respectivement les tailles telles que 90 % et 10 % des particules soient inférieures ou égales à ces tailles.

L'agent tensioactif peut être ajouté dans la phase aqueuse ou dans la composition polyisocyanate, conformément à l'invention. On préfère toutefois ajouter l'agent tensioactif dans la composition polyisocyanate, plutôt que dans la phase aqueuse de façon à éviter la formation de mousse.

Si toutefois, l'agent tensioactif est ajouté à la phase aqueuse, on choisira celui-ci de manière à éviter ou du moins à minimiser la formation de mousse.

Ledit agent tensioactif est un agent pur ou un mélange d'agents.

De façon préférée mais non exclusive, on utilise un agent tensioactif formant un mélange auto-émulsionnable.

On préfère également que l'agent tensio-actif ne soit pas lié chimiquement à l'isocyanate, les propriétés d'application des compositions finales étant alors meilleures.

La composition polyisocyanate peut comporter divers groupements porteurs de fonction(s) isocyanate(s) et ses composants seront définis plus en détail ultérieurement.

Ainsi, au cours de l'étude qui a mené à la présente invention, il a été montré que de façon surprenante il était possible de faire, en une seule opération :

- la réaction de masquage des fonctions isocyanates d'un isocyanate ou d'un polyisocyanate, ou d'un mélange d'isocyanates et/ou de polyisocyanates avec un ou plusieurs groupes protecteurs, en milieu aqueux ;
- et la mise en émulsion de la composition formée au cours du procédé en présence d'un tensioactif.

L'ordre des opérations ci-dessus n'a pas été établi dans tous les cas avec certitude. Mais à la fin de cette double opération, on obtient une émulsion d'isocyanate(s) masqué(s), ayant une stabilité physique élevée, une granulométrie fine et une teneur en solides élevée, avantageusement supérieure à 50 %, en poids, par rapport au poids de l'émulsion.

Par stabilité physique, on entend que l'émulsion ne présente pas de séparation de phase pendant au moins 15 jours, avantageusement au mois un mois, de préférence au mois deux mois, à température ambiante.

Il est souhaitable que l'émulsion obtenue soit également chimiquement stable, ce qui signifie que moins de 10 % des fonctions isocyanates masquées présentent une réaction chimique vis à vis de l'eau après une durée de stockage d'au moins 15 jours, au moins un mois, de préférence au moins deux mois à température ambiante.

Ainsi, les opérations de mise en émulsion et de masquage sont menées conjointement et simultanément. Ceci est contraire à l'enseignement de la demande européenne n° 524.511, où l'addition de la composition isocyanate est brutale et où la formation de l'émulsion ne s'étage pas sur une période assez longue.

Pour obtenir de bons résultats, il convient d'introduire la composition isocyanate de manière à éviter une trop grande proportion de fonctions isocyanates libres dans le mélange réactionnel. Cette limite varie avec les autres paramètres réactionnels. En particulier dans la phase isocyanate en recirculation, il est préférable que la teneur en fonctions isocyanates libres soit au plus égale à 2 équivalents par kg (c'est-à-dire environ 8 % en masse de fonction isocyanate), avantageusement à environ 1 équivalent par kg (c'est-à-dire environ 4 % en masse), de préférence à 0,8.

On peut toutefois indiquer que quelles que soient les conditions, il est préférable de régler l'introduction de manière que le rapport entre les concentrations respectivement en isocyanate libre dans la phase isocyanate et en agent masquant exprimée en équivalent ou en mole par litre de phase aqueuse (hors agent masquant) soit inférieur à 1, avantageusement au plus égal à 0,5, de préférence à 0,2.

Cette façon de faire est particulièrement originale et inattendue quand on connaît la réactivité de la fonction isocyanate avec l'eau.

Lorsque le procédé de l'invention comporte également une étape b), la quantité de composition isocyanate introduite dans la phase aqueuse par unité de temps dépend bien évidemment des capacités du dispositif à fort taux de cisaillement et du transfert de chaleur.

De manière générale, une faible valeur de débit assure une émulsification progressive et augmente indirectement le nombre de recirculation dans la zone de cisaillement.

Au cours de la phase c) du procédé selon l'invention, notamment au cours du régime en recirculation, on veillera de même à ce que la teneur en fonctions isocyanates libres soit au plus égale à 5 à 6 % en masse, de préférence à 2 % en masse, par rapport au total des fonctions isocyanates (libres et masquées).

Selon le procédé de l'invention, on a déterminé que la réaction de masquage du polyisocyanate avait majoritairement lieu dans le dispositif de cisaillement. Ainsi, on estime qu'au moins environ 90 %, et plus avantageusement 95 % de la réaction se déroule sous l'effet du cisaillement élevé auquel est soumis le mélange.

De manière surprenante, on a constaté que le procédé pouvait être mis en oeuvre sur une échelle industrielle sans que la réaction ne s'emballe du fait des points de surchauffe imputables au dispositif à fort cisaillement se conjuguant avec le caractère exothermique de la réaction.

Le procédé selon l'invention permet en outre d'obtenir des émulsions de polyisocyanates bloqués (ou masqués) par des groupes protecteurs de nature différente en faisant réagir de la même manière que décrit ci-dessus les polyisocyanates avec un mélange d'agents protecteurs.

Le procédé permet de faire des émulsions de mélanges de polyisocyanates de natures diverses dont les fonctions isocyanates peuvent être masquées par des groupes protecteurs identiques ou différents.

Ainsi, ladite composition présentant une fonction isocyanate peut-être un produit pur ou plus généralement un mélange de plusieurs constituants ; les constituants de ladite composition, sont d'une part une, ou plus généralement un mélange de molécules porteuses de fonctions isocyanates, certaines pouvant être masquées, et d'autre part optionnellement des adjuvants sensiblement inertes dans les conditions opératoires ; ce sont le plus souvent des solvants. En général, les molécules porteuses de fonctions isocyanates éventuellement partiellement masquées sont des oligomères de composés considérés comme des monomères à des degrés de polymérisation variable.

A titre indicatif, lorsque l'on est en face d'un mélange de molécules porteuses de fonctions isocyanates éventuellement partiellement masquées, ladite composition présentant des fonctions isocyanates libres comporte en moyenne plus de une et jusqu'à cinq fonctions isocyanates (masquées ou non) par molécule porteuse de fonction(s) isocyanate(s).

La dite composition présentant une fonction isocyanate comporte de préférence et en moyenne, 4/3 à 4 fonctions isocyanates (masquées ou non) par molécule porteuse de fonction(s) isocyanate(s).

Cependant, pour obtenir des bons réticulants on préfère réaliser des compositions selon la présente invention, présentant statistiquement plus de 2 fonctions isocyanates (masquées ou non).

Ainsi que cela a été déjà mentionné, ces molécules porteuses de fonctions isocyanates, et qui sont souvent principalement des oligomères (d'un poids moléculaire supérieur à 300, avantageusement supérieur à 500 et inférieur à 5 000, avantageusement inférieur à 2 000), peuvent déjà être globalement partiellement masquées et présenter ainsi une partie de leurs fonctions isocyanates masquées.

En général, le nombre moyen de fonction isocyanate libre par molécule porteuse varie de $10^{-2}$ à 20, plus spécifiquement de 0,1 à 3. Mais elle présente surtout un intérêt économique pour des valeurs supérieures à 1, avantageusement au moins égal à 2.

Dans la suite de la présente description on détaillera un peu plus la structure des constituants préférés. Il est avantageux que ces caractéristiques soient remplies par les molécules porteuses de fonctions isocyanates masquées ou non d'au moins 1/3, avantageusement 1/2, de préférence 2/3 des fonctions isocyanates.

Il convient de rappeler qu'un agent masquant est un agent qui réagit avec les fonctions isocyanates à basse température et les libèrent suffisamment à haute température pour que le coréactif (en général, polyol ou polyamine) puisse se condenser sur la fonction isocyanate masquée.

De manière surprenante, alors que les produits ainsi obtenus sont labiles, il est possible de privilégier en présence d'une phase aqueuse la réaction de masquage. Cela est particulièrement surprenant pour les agents de masquage dont la température de libération est relativement faible. Ainsi a-t-on pu réaliser des masquages selon la présente invention pour des agents dont la température de libération (test à l'octanol sur une fonction isocyanate portée par un méthylène et en position non néopentylique (c'est-à-dire que l'atome de carbone portant le méthylène n'est pas tertiaire]) est comprise entre environ 80°C, avantageusement 110°C et environ 200°C. Les agents de masquage les plus intéressants sont ceux dont la température de libération est comprise entre 80°C, avantageusement 110°C et 160°C.

Ledit agent masquant A, qui peut être un mélange d'agents masquants, présente le plus souvent au moins un hydrogène mobile de manière que la réaction de masquage puisse s'écrire :

Is-N=C=O + AM-H ----------> Is-NH-CO(AM)

où AM-H représente l'agent masquant ;
où AM- représente le groupe masquant ;
où Is représente le porteur de la fonction isocyanate considérée.

Ledit agent masquant présente au moins une fonction portant un hydrogène mobile, ou plus exactement réactif, fonction pour laquelle on peut définir un pKa lequel correspond, soit à l'ionisation d'un acide [y compris l'hydrogène des fonctions ols (dans la présente description on entend par "ol(s)" les phénols et les alcools), soit à l'acide associé d'une base (en général azotée). Plus précisément pour optimiser les résultats de la présente invention, ledit pKa (ou l'un d'entre eux si l'on peut en définir plusieurs) de la fonction présentant des hydrogènes est au moins égal à 4, avantageusement à 5, de préférence à 6 et est au plus égal à 14, avantageusement à 13, de préférence à 12, et de manière plus préférée à 10, une exception devant être faite pour les lactames dont le pKa est supérieur à ces valeurs et qui constituent des agents masquants néanmoins acceptables bien que non préférés pour l'invention.

A titre d'exemples non limitatifs, des agents de masquage selon l'invention, on peut citer les dérivés de l'hydroxylamine tels que l'hydroxysuccinimide et (es oximes telles tel que la méthyl éthylcétoxime ; les dérivés de l'hydrazine tels que les pyrazoles, les dérivés des triazoles, les dérivés des phénols ou assimilés, les dérivés des amides tels les imides et les lactames, ainsi que les malonates ou cétoesters et les hydroxamates.

Pour la détermination des pKa, on pourra se reporter à "The détermination of ionization constants, a laboratory manual, A Albert of E.P. Serjeant ; Chapman and Hall Ltd, London".

Pour la liste des agents bloquants, on pourra se reporter à Z. Wicks (Prog. Org. Chem., 1975, 3, 73 et Prog. Org. Chem., 1989, 9,7) et Petersen (Justus Liebigs, Annalen der Chemie 562, 205, (1949).

Le, ou les, agent(s) de masquage utile(s) à la réaction de protection de la fonction isocyanate peuvent être hydrosolubles ou non. Cette hydrosolubilité rend le procédé selon la présente invention aisé, même si cette solubilité n'est que partielle.

S'ils sont suffisamment solubles ou peu visqueux pour se disperser facilement dans la phase aqueuse, il n'y a, là non plus, pas de difficulté ; sinon il suffit d'ajouter un solvant pour abaisser leur viscosité. Ainsi pour les agents de masquage liquides, on pourra avoir un mélange homogène ou biphasique en fonction de l'hydrosolubilité de l'agent de masquage.

En ce qui concerne les produits solides et entièrement hydrosolubles à la température de réaction du mélange réactionnel, ils peuvent être utilisés tels quels.

Pour ce qui est des produits solides, qui ne sont que partiellement hydrosolubles à la température de réaction, on peut en général, les utiliser tels quels ou, le cas échéant, rendre le milieu réactionnel plus aisément agitable en ajoutant soit une petite quantité de solvant pour solubiliser l'agent protecteur (ce qui ramène à la question ci-avant des agents de masquage liquides), soit un tiers solvant (sensiblement inerte dans les conditions opérationnelles), où encore les utiliser sous forme fondue ou aqueuse chaude.

L'agent de masquage peut être introduit en une seule fois dans le pied du réacteur avec l'eau et éventuellement le tensioactif. Il peut être également introduit de manière continue dans le milieu réactionnel en co-injection avec le polyisocyanate. Dans ce dernier cas, on travaillera de préférence avec une quantité d'agent de blocage (ou de masquage) dans le milieu réactionnel toujours suffisante pour pouvoir masquer la fonction isocyanate, éventuellement au fur et à mesure de son introduction lorsque cette dernière est progressive, et de façon à ce que la teneur en fonctions isocyanates vraies en recirculation ne soit pas supérieure aux limites indiquées ci-dessus.

Dans tous les cas, on cherchera à avoir un rapport molaire (ou plus exactement un rapport en équivalent) agent de masquage A/fonction(s) isocyanate(s) qui, compte tenu des éventuels réactifs (compte non tenu de l'eau), a une valeur au moins égale à une valeur proche de la stoechiométrie, généralement compris entre 0,8 et 2, avantageusement entre 0,9 et 1,2 Q.S. (c'est-à-dire Quantité Stoechiométrique).

Mais dans le cas où l'agent de masquage peut être utilisé comme (co)solvant et qu'il est compatible avec l'émulsion, la limite supérieure du rapport est largement supérieure à 2 et l'excès qui n'a pas réagi avec les fonctions isocyanates peut constituer jusqu'à 1/4 en masse de l'émulsion finale.

Pour favoriser la sélectivité de la réaction, on pourra ainsi introduire dans le milieu réactionnel des aminés tertiaires ou tout catalyseur qui favorise la réaction de masquage de la fonction isocyanate par l'agent de masquage plus que la réaction des hydroxyles de l'eau avec les fonctions isocyanates.

Le tensioactif utile à la formation de l'émulsion est choisi parmi des tensioactifs standards connus par l'homme de l'art pour leurs propriétés à former des émulsions.

Le tensioactif peut soit être étranger à l'isocyanate, soit être lui même un isocyanate et résulter de la réaction d'un isocyanate sur un précurseur présentant une fonction à hydrogène réactif (ledit précurseur soit présentant une hydrophilie significative soit étant lui même déjà amphiphile), soit être un mélange des deux. Cette synthèse soit peut avoir été réalisée préalablement au masquage, soit être réalisée simultanément.

Le(s) agent(s) tensioactif(s) (B) mis en oeuvre peuvent être non-ioniques de HLB supérieur à 10, de préférence de l'ordre de environ 10 à environ 20, anioniques, cationiques, zwitterioniques ou amphotères avantageusement de HLB supérieur à environ 10.

Les agents tensioactifs non-ioniques peuvent être choisis parmi les acides gras alcoxylés, les alcoylphénols polyalcoxylés, les alcools gras polyalcoxylés, les amides gras polyalcoxylés ou polyglycérolés, les alcools et les alphadiols polyglycérolés, les polymères blocs oxyde d'éthylène-oxyde de propylène. ainsi que les alcoylglucosides, les alcoylpolyglucosides, les sucroéthers, les sucroesters, les sucroglycérides, les esters de sorbitan, et les composés éthoxylés de ces dérivés de sucres présentant avantageusement un HLB d'au moins environ 10.

Les agents tensioactifs anioniques peuvent être choisis parmi les alcoylbenzènesulfonates, les sulfates de monoalcoyle, les alcoyléthersulfates, les alcoylaryléthersulfates, les dialcoylsulfosuccinates, les alcoylphosphates, les étherphosphates bien dissociés tels que ceux constituant des sels alcalins, d'ammoniums, avantageusement quaternaires, présentant avantageusement un HLB d'au moins environ 10. Certains agents tensioactifs préférés seront détaillés ci-après.

Parmi les agents tensioactifs cationiques, on peut citer les amines grasses aliphatiques ou aromatiques, les amides gras aliphatiques, les dérivés d'ammonium quaternaire présentant avantageusement un HLB d'au moins environ 10.

Parmi les agents tensioactifs zwitterioniques ou amphotères. on peut citer les bétaïnes et leurs dérivés, les sultaïnes et leur dérivés, les lécithines, les dérivés d'imidazoline, les glycinates et leurs dérivés, les amidopropionates, les oxydes d'amines grasses présentant avantageusement un HLB d'au moins environ 10.

Le (mélange de) tensioactif(s) est choisi en fonction de la nature de l'huile et/ou de la gomme et/ou de la résine à groupement (poly)isocyanate ; avantageusement un HLB de l'ordre de 11 à 15 est généralement choisi pour émulsifier une huile ou une gomme (poly)isocyanate ; toutefois des agents tensioactif ioniques de HLB au moins égal à environ 20 (dans la présente description le terme "environ" est employé pour mettre en exergue le fait que, lorsque le, ou les, chiffres les plus à droite d'un nombre sont des zéros, ces zéros sont des zéros de position et non des chiffres significatifs, sauf bien entendu s'il en est précisé autrement) conviennent également.

En général, lorsque ces tensioactifs sont des tensioactifs non ioniques, ils possèdent des groupes hydrophiles tels que, par exemple, des groupes oxydes d'éthylène en nombre suffisant, généralement supérieur à environ 10, pour permettre une mise en émulsion facile des polyisocyanates, masqués ou non. Ces tensioactifs possèdent également une partie hydrophobe qui peut être choisie parmi les groupes aromatiques porteurs de chaînes aliphatiques ou simplement parmi des chaînes aliphatiques à nombre de carbones compris entre 8 et 50. D'autres motifs hydrophobes tels que des motifs silicones ou fluorés peuvent également être utilisés pour des applications particulières.

On peut citer à titre d'exemples non limitatifs les dérivés des esters polyoxyalcoylène des acides gras, des alcoyl phénols éthoxylés, des esters. phosphates à chaîne poly alcoyloxy alcoylène glycol (tels que les poly-oxy et/ou propoxy éthylène glycol, par exemple), et les tristyryl phénols à chaîne polyoxydes d'éthylène.

Ledit agent tensioactif peut également consister en un agent (ou un mélange d'agent) neutre ou présentant une fonction anionique. Ces derniers sont préférés.

Ainsi, avantageusement, ledit agent (ou un mélange d'agents) tensioactif contient un composé comportant

une fonction anionique et un fragment de chaîne polyéthytène glycol d'au moins une, avantageusement au moins 5, de préférence d'au moins 7 unités alkylèneoxyles de formule :

$$-(CHR-CH_2-O)-$$

avec R= H ou $CH_3$ avantageusement éthylènoxyles. Ledit agent tensioactif (ou l'un de ses constituants) est avantageusement à base d'un composé qui présente une fonction anionique.

Selon la présente invention, ledit composé tensioactif peut être utilisé seul, ou en mélange avec un ou plusieurs autres agents tensioactifs. Ces derniers peuvent être des agents répondant aussi à l'obligation ci-dessus de comporter une fonction anionique et avantageusement un fragment de chaîne polyéthylène glycol de préférence d'au moins 5 unités oxyéthylène et/ou oxypropylène.

Ces éventuels agents tensioactifs peuvent également être choisis parmi d'autres composés ioniques [notamment sulfate ou phosphate d'aryle(s) et/ou d'alcoyle(s) (bien entendu aryle englobe notamment les alcoylaryles et alcoyle englobe notamment les aralcoyles), les aryl- ou alcoyl-phosphonate,-phosphinate, sulfonate, sel d'acide gras et/ou zwitterionique] et parmi des composés non-ioniques bloqués en bout de chaîne ou non (toutefois les composés non ioniques présentant des fonctions alcooliques sur au moins l'une des chaînes semblent avoir un effet légèrement défavorable sur l'(auto)émulsion même s'ils ont un effet favorable sur d'autres aspects de la composition pour peinture ; compte tenu de cela il est préférable que la teneur en ce type de composé représente au plus un tiers, avantageusement au plus un cinquième, de préférence au plus un dixième en masse desdits composés anioniques selon l'invention).

Avantageusement ledit composé comporte une partie hydrophile formée de ladite fonction anionique, dudit (éventuel) fragment de chaîne polyéthylène glycol et d'une partie lipophile à base d'un radical hydrocarboné.

Ladite partie lipophile est en général choisie parmi les groupes alcoyles [dans la présente description ALCO*yle* est pris dans son sens éthymologique de reste hydrocarboné d'un ALCO-Ol après ignorance de la *fonction alcool (ou ol)]; et aryles.* Lorsque le nombre de fonctions éthylène glycol est au plus égal à 5, les alcoyles simples sont avantageusement ramifiés, avantageusement de $C_8$ à $C_{12,}$ les aralcoyles $C_{12}$ à $C_{16}$, les alcoylaryles de $C_{10}$ à $C_{14}$ et les aryles simples sont des $C_{10}$ à $C_{16}$. Sinon la partie lipophile peut varier largement surtout lorsque le nombre de motifs éthylène glycol est supérieur à 10, elle peut ainsi constituer un radical hydrocarboné d'au moins 1, avantageusement d'au moins 3 et comportant au plus 25 avantageusement au plus 20 atomes de carbone.

Avantageusement ledit composé répond à la formule I suivante :

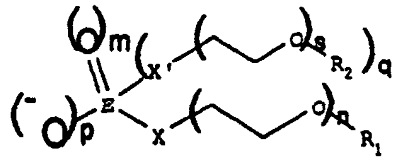

où q représente zéro ou 1 ;

où p représente un entier entre 1 et 2 (intervalles fermés c'est-à-dire comprenant les bornes) ;

où m représente zéro ou un entier entre 1 et 2 (intervalles fermés c'est-à-dire comprenant les bornes) ;

où X et X', semblables ou différents, représente un bras comportant au plus deux chaînons carbonés ;

où s est zéro ou un entier choisi entre 1 et 30 avantageusement entre 5 et 25, de préférence entre 9 et 20 (intervalles fermés c'est-à-dire comprenant les bornes);

où n est zéro ou un entier choisi entre 1 et 30 avantageusement entre 5 et 25, de préférence entre 9 et 20 (intervalles fermés c'est-à-dire comprenant les bornes);

où E est un élément choisi parmi le carbone et les éléments métalloïdes de rang atomique au moins égal à celui du phosphore et appartenant à la colonne VB ou aux chalcogènes de rang atomique au moins égal à celui du soufre ;

où $R_1$ et $R_2$, semblables ou différents, représentent un radical hydrocarboné, avantageusement choisi parmi les aryles et les alcoyles éventuellement substitués.

Quoique cela ne fasse pas partie des composés préférés, il convient de noter que s et/ou n peuvent être égaux à zéro, avec la condition que E est phosphore et que lorsque s et n sont égaux à zéro, respectivement $R_1$ et/ou $R_2$ sont alcoyles de $C_8$ à $C_{12}$, avantageusement ramifiés, ou aralcoyles de $C_{12}$ à $C_{16}$ ou alcoylaryles de $C_{10}$ à $C_{14}$.

L'un des radicaux divalents X et X' peut aussi être un radical de type ($[EO_m (O^-)_p]$) de manière à former des pyroacides comme les diesters symétriques ou non de l'acide pyrophosphorique .

Le nombre total de carbone des composés anioniques visés par la présente invention est avantageusement d'au plus environ 100, de préférence au plus environ 50.

Les radicaux divalent X et éventuellement X' sont avantageusement choisis parmi les radicaux divalents constitués par (la partie gauche de la formule étant lié au premier E):

⇒ quand E est P, un des X ou X' peut être O-P(O)($O^-$)-X"-;
⇒ quand E est P, un des X ou X' peut être -O-(R10-O)P(O)-X"-; ($R_{10}$ étant défini ci après)(X" représentant un oxygène ou une simple liaison) ;

→ une liaison directe entre E et le premier éthylène dudit fragment de chaîne polyéthylène glycol ;
→ un méthylène éventuellement substitué et dans ce cas avantageusement fonctionnalisés en partie ;
→ les bras de structure -Y- et de structure -D-Y-, -Y-D-, -Y-D-Y' (où Y' présente les mêmes valeurs que Y)

où Y représente un chalcogéne (avantageusement choisi parmi les plus légers à savoir le soufre et surtout l'oxygène), les éléments métalloïdes des rangs atomiques au plus égal à celui du phosphore et appartenant à la colonne VB sous la forme de dérivés d'aminés ou de phosphines tertiaires (le radical assurant le caractère tertiaire étant avantageusement d'au plus 4 atomes de carbone, de préférence d'au plus 2 atomes de carbone) ;

où D représente un alcoylène éventuellement substitué, y compris fonctionnalisé, D étant avantageusement éthylène ou méthylène, de préférence éthylène dans les structures -D-Y- et surtout -Y-D-Y', et méthylène dans les structures -Y-D-,

Ainsi E représente un atome choisi parmi les atomes de carbone (avantageusement dans ce cas m =1 et p = 1, le prototype de ce type de composé est un acide alcool [Par exemple acide lactique ou glycolique] polyéthoxylé), les atomes donnant les pnictures (éléments de la colonne VB)(avantageusement dans ce cas m = 1 ou 0 et p = 1 ou 2), les atomes de chalcogéne de rang supérieur à l'oxygène (avantageusement dans ce cas m =1 ou 2 et p = 1 et q =0).

Ainsi dans le cas où E est un atome de chalcogène la formule I se simplifie avantageusement en :

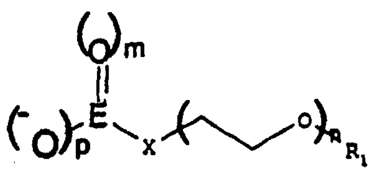

Avantageusement E représente le carbone et surtout le phosphore ou le soufre, de préférence le phosphore :

dans ce dernier cas la formule (I) devient la formule (II) :

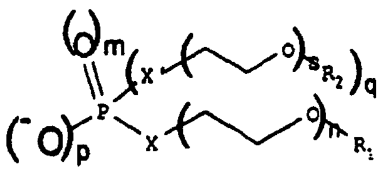

avec lorsque q est zéro :

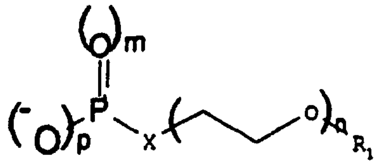

- où p représente zéro ou un entier entre 1 et 2 (intervalles fermés c'est-à-dire comprenant les bornes);
- où m représente zéro ou un entier entre 1 et 2 (intervalles fermés c'est-à-dire comprenant les bornes);

- où la somme p + m + q est au plus égale trois ;
- où la somme 1 + p + 2m + q est égale trois ou à cinq ;
- où X et X', semblables ou différents, représentent un bras comportant au plus deux chaînons carbonés ;
- où n et s, semblables ou différents, représentent un entier choisi entre 5 et 30 avantageusement entre 5 et 25, de préférence entre 9 et 20 (intervalles fermés c'est-à-dire comprenant les homes) ;
- où $R_1$ et $R_2$, semblables ou différents, représentent un radical hydrocarboné, avantageusement choisi parmi les aryles et les alcoyles éventuellement substitués notamment par atome d'halogène notamment fluor.

La classification périodique des éléments utilisée dans la présente demande est celle du supplément au Bulletin de la Société Chimique de France, janvier 1966, n° 1.

La fonctionnalisation éventuelle des alcoylènes et notamment méthylènes (X et X') est faite par des fonctions hydrophiles (amines tertiaires et autres fonctions anioniques y compris celles qui sont décrites ci-dessus [$EO_m$ $(O-)_p$]).

Le contre-cation est avantageusement monovalent et est choisi parmi les cations minéraux et les cations organiques avantageusement non nucléophiles et par voie de conséquence de nature quaternaire ou tertiaire (notamment oniums de la colonne V tel que phosphonium, ammoniums, voire de colonne VI tel que sulfonium,.....) et leurs mélanges, le plus souvent ammoniums, en général issus d'une aminé, avantageusement tertiaire. Avantageusement, on évite que le cation organique présente un hydrogène réactif avec la fonction isocyanate. D'où la préférence vis-à-vis des aminés tertiaires.

Les cations minéraux peuvent être séquestrés par des agents de transfert de phases comme les éthers couronnes.

Le pKa des cations (organiques [ammonium.....] ou minéraux) est avantageusement compris entre 8 et 12.

Les cations et notamment les aminés correspondant aux ammoniums ne présentent avantageusement pas de propriété tensioactive mais il est souhaitable qu'elles présentent une bonne solubilité en tout cas suffisante pour assurer celle desdits composés comportant une fonction anionique et avantageusement un fragment de chaîne polyéthylène glycol, en phase aqueuse et ce à la concentration d'emploi. Les aminés tertiaires présentant au plus 12 atomes, avantageusement au plus 10 atomes, de préférence au plus 8 atomes de carbone par fonction "onium" (rappelons qu'il est préféré qu'il n'y en ait qu'une par molécule) sont préférées. Les amines peuvent comporter d'autres fonctions et notamment les fonctions correspondant aux fonctions des acides aminés et des fonctions éther cyclique comme la N-méthylmorpholine, ou non. Ces autres fonctions sont avantageusement sous une forme qui ne réagit pas avec les fonctions isocyanates et n'altèrent significativement pas la solubilité en phase aqueuse.

Il est très souhaitable que les composés anioniques selon la présente invention soient sous une forme neutralisée telle que le pH induit lors d'une dissolution ou d'une mise en contact dans l'eau soit au moins égal à 3, avantageusement à 4, de préférence à 5 et au plus égal à 12, avantageusement à 11, de préférence à 10.

Lorsque E est phosphore, il est souhaitable d'utiliser des mélanges de monoester et de diester dans un rapport molaire compris entre 1/10 et 10, avantageusement entre 1/4 et 4. De tels mélanges peuvent en outre comporter de 1 % jusqu'à environ 20 % (il est toutefois préférable que cela ne dépasse pas environ 10 %) en masse d'acide phosphorique (qui sera avantageusement salifié au moins en partie de manière à être dans les zones de pH préconisées) et de 0 à 5 % d'esters de l'acide pyrophosphorique.

Le rapport tensioactif ou mélange de tensioactifs sur polyisocyanate(s) de départ est avantageusement au moins égal à 0,5 % ; de préférence à au moins 1 %, plus préférentiellement à 5 %. Ce rapport est avantageusement ≤ (au plus égal à) environ 20 %, de préférence à environ 10 %, plus préférentiellement à 10 % (2 chiffres significatifs).

Pour une bonne stabilité de l'émulsion, on préfère que le rapport soit compris entre 3 % et 8 %, un rapport particulièrement préféré étant compris entre 4,5 % et 5,5 %.

Le tensioactif peut également être engendré in situ au cours de la réaction de masquage par réaction d'une molécule possédant une fonction réactive avec la fonction isocyanate et possédant un nombre d'oxyde d'éthylène suffisant pour que la molécule finale possède des capacités émulsifiantes.

Dans le dernier cas, il faut que la fonction réactive de la molécule ait une fonction hydrogène réactive répondant aux mêmes critères que ceux définis ci- dessus pour les fonctions des agents de masquage.

Dans certains cas, on peut introduire un premier tensioactif qui facilite la dispersion de ladite composition avant masquage selon la présente invention, dans le milieu réactionnel et un second tensioactif qui stabilise l'émulsion de polyisocyanate(s) après la réaction de masquage selon la présente invention.

Les isocyanates notamment aliphatiques réagissent avec certains des composés anioniques visés par l'invention, ils réagissent avec l'hydroxyle des fonctions acides non ou mal neutralisées.

En particulier, dans le cas des phosphates (m = 1 ) ils réagissent pour donner des composés du type :

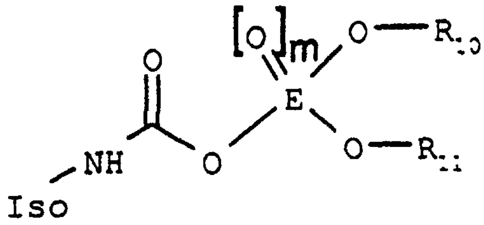

Mais quand E appartient à la colonne du phosphore et que m (qui est le même que dans la formule I) est égal à zéro le composé s'isomérise (ou se fait directement) pour donner :

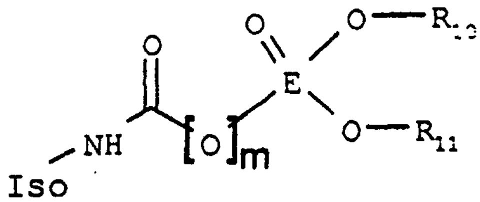

⇒ où E est un élément de la colonne Va de la classification périodique des éléments [(supplément au Bulletin de la Société Chimique de France Janvier 1966 N°1) avantageusement du phosphore]. Et donc notamment du type :

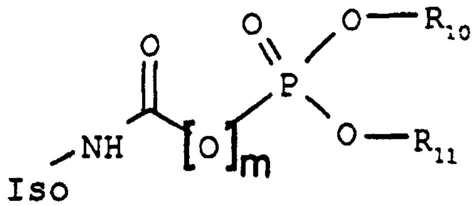

⇒ où Iso est le reste (d'un poly)isocyanate (après élimination d'une fonction isocyanate),

⇒ où $R_{10}$ est un reste hydrocarboné (c'est-à-dire contenant des atomes d'hydrogène et de carbone) dont le point d'attache [c'est-à-dire l'atome porteur de la liaison ouverte) est un carbone,

⇒ où $R_{11}$ est choisi parmi:

→ une charge négative ;

→ un groupe de formule:

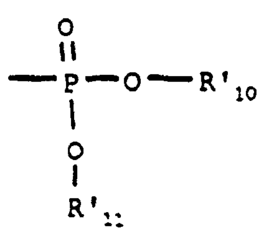

dans laquelle $R'_{10}$ est choisi parmi les restes hydrocarbonés (semblables ou différents de $R_{10}$) et une charge négative dont le point d'attache [c'est-à-dire l'atome porteur de la liaison ouverte] est un carbone,

dans laquelle le(s) $R'_{11}$ est (sont) choisi(s) parmi les restes hydrocarbonés dont le point d'attache [c'est-à-dire l'atome porteur de la liaison ouverte] est un carbone (semblables ou différents de $R_{10}$ et de $R'_{11}$) et une charge

négative.

Il est souhaitable qu'au moins un des substituants organiques ($R_{10}$ ; $R'_{11}$ ; $R'_{10}$) comporte un fragment de chaîne polyéthylène glycol avantageusement d'au moins 5, de préférence d'au moins 7 unités éthylènyloxydes. En d'autres termes il est souhaitable qu'au moins un des substituants organiques, réponde à la même formule que les substituants de E dans la formule générale Plus spécifiquement au moins un des substituants organiques ($R_{10}$ ; $R'_{11}$ ; $R'_{10}$) répond à la formule :

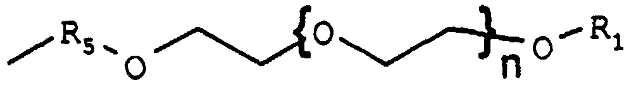

où $R_5$ représente un bras comportant au plus deux chaînons carbonés (avec les mêmes valeurs préférées que X' et X);

où n est un entier choisi entre 0 et 30 avantageusement entre 5 et 25, de préférence entre 9 et 20 (intervalles fermés c'est-à-dire comprenant les bornes);

où $R_1$ représente un radical hydrocarboné, avantageusement choisi parmi les aryles et les alcoyles éventuellement substitués.

Ainsi, selon une variante avantageuse de la présente invention, les compositions selon la présente invention présentent des composés issus de la réaction exposée ci-dessus dans une proportion globale, par rapport à un volume d'un litre d'isocyanate, de 0,01 à 1, avantageusement de 0,05 à 0,5, de préférence de 0,05 à 0,3 équivalent de fonction :

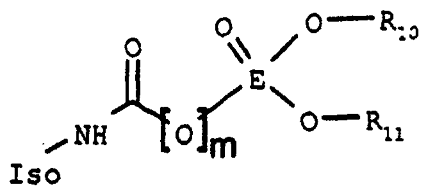

Il est avantageux que le radical Iso procure majoritairement ou en totalité un lien aliphatique avec les mêmes préférences que celles exposées ci-dessus à propos des isocyanates.

Font donc également partie de l'invention les composés de formule :

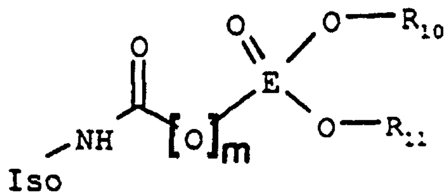

- dans laquelle $R_{10}$ et $R_{11}$ peuvent prendre les valeurs ci-dessus mais aussi quand m est 1, être une charge négative en raison du fait que dans certains lots il peut y avoir des quantités significatives d'acide phosphorique résiduel.

Bien sûr alors $R_{10}$ peut aussi valoir :

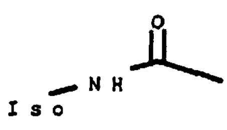

Le radical Iso pouvant ou non être alors le même que celui de l'avant dernière formule,

- dans laquelle Iso représente le reste d'un polyisocyanate, avantageusement d'un produit de réaction d'un monomère diisocyanate pour former du biuret ou des isocyanurates (trimère), ou avec un di- ou poly-ol avantageusement un triol ou un tétra-ol.

Il est avantageux que le radical Iso procure majoritairement ou en totalité un lien aliphatique avec les mêmes préférences que celles exposées ci-dessus à propos des isocyanates.
Le rapport massique entre les isocyanates à mettre en suspension et le composé tensioactif comportant une fonction anionique et un fragment de chaîne polyéthylène glycol est le plus souvent au plus égal à 1/3 avantageusement au plus égal à environ 20%, de préférence à environ 10 % (dans la présente description le terme "environ" est employé pour mettre en exergue le fait que, lorsque le, ou les, chiffres les plus à droite d'un nombre sont des zéros, ces zéros sont des zéros de position et non des chiffres significatifs, sauf bien entendu s'il en est précisé autrement).
Le rapport massique entre les isocyanates à mettre en suspension et ledit composé comportant une fonction anionique et un fragment de chaîne polyéthylène glycol est avantageusement supérieur à 1 %, de préférence à 2 %.
Ainsi le rapport massique entre les isocyanates à mettre en suspension et ledit composé comportant une fonction anionique et un fragment de chaîne polyéthylène glycol est avantageusement compris entre 2 % et 20 %, de préférence entre 4 et 10 %.
Avantageusement Iso porte, outre la fonction figurée sur la formule au moins une, de préférence au moins deux fonctions isocyanates, dont, de préférence, au moins une n'est pas masquée, et dont, plus préférentiellement. au moins deux ne sont pas masquées.
L'utilisation des agents tensio-actifs qui viennent d'être décrits pour le masquage en émulsion d'isocyanates n'a jamais été décrite.
Cette utilisation nouvelle constitue un autre objet de l'invention.
La phase aqueuse peut comporter divers agents, notamment des polymères épaississants.
La phase aqueuse peut comporter également un polyol ou un mélange de polyols de nature polyacrylique ou polyester sous forme d'émulsion ou de solution.
La mise en oeuvre du procédé va être détaillée ci-après.
Il est souhaitable que le pH de la phase aqueuse soit maintenu pendant la durée de la réaction à une valeur au plus égale à 12, avantageusement à 11, de préférence à 10.
Il est souhaitable que le pH de la phase aqueuse soit maintenu pendant la durée de la réaction à une valeur au moins égale à la valeur (pKa -2), avantageusement au moins égale à la valeur (pKa -1 ), de préférence au moins égale à la valeur du pKa du, ou d'un des agent(s) masquant(s).
Lorsqu'on utilise plusieurs agents masquants, il peut être préférable de se situer à un pH tel que défini ci-dessus correspondant à la valeur de pKa la plus élevée. Dans ce cas, la réaction de masquage a lieu avec l'ensemble des agents masquants du mélange.
On peut également faire varier le pH selon que l'on souhaite que la réaction ait lieu simultanément ou préférentiellement avec l'agent de masquage ayant le pKa le plus bas.
L'utilisation de phosphates apporte un effet tampon qui favorise la réaction de l'agent masquant vis à vis de celle de l'eau. En outre, l'utilisation de solutions tampons et tout particulièrement les solutions de phosphates à caractères tensioactifs favorise la réaction de l'isocyanate avec l'agent masquant plutôt qu'avec l'eau.
Selon une mise en oeuvre particulièrement avantageuse de la présente invention, la température de la réaction est au plus égale à 50°C, de préférence à 40°C, et au moins égale à environ 0°C (température de fusion commençante de la phase aqueuse) et de préférence à environ 20°C. Des gradients de température peuvent également être adaptés pour optimiser le procédé.
Il est en outre souhaitable que la réaction soit menée à une température au plus égale à la température de point de trouble (pour les non-ioniques) du tensioactif ou du mélange de tensioactif utilisé, avantageusement à une température inférieure d'au moins 5°C, de préférence d'au moins 10°C à celle du point de trouble.
Lorsque ladite composition présentant une fonction isocyanate n'est pas assez fluide, il est peut être utile d'y ajouter un solvant ; ainsi ladite composition présentant une fonction isocyanate comportera alors un solvant, y compris un mélange de solvants.
La réaction de masquage est effectuée sous agitation.
En général, l'agitation est menée au moyen d'un dispositif mélangeur dans des conditions assurant que 90 % en masse, avantageusement 95 % en masse des particules (gouttelettes) soient d'une taille comprise entre 0,005 et 50 micromètres (entre 0,005 et 50 μm), avantageusement entre 0.05 micromètre et 20 micromètres de préférence comprise entre 0,1 et 10 micromètres.
Il est important que l'agitation utilisée soit choisie de telle manière qu'elle apporte un taux de cisaillement suffisant pour que la taille des particules soit suffisamment faible et conduise à une émulsion stable. Des systèmes

des types "ultra turax" par exemple semblent bien adaptés pour ce type de procédés. D'autres types de mélangeurs broyeurs peuvent également être utilisés.

Dans la variante préférée de l'invention, la composition isocyanate non bloquée ou partiellement bloquée contenant éventuellement l'agent tensioactif et/ou un solvant est introduite progressivement dans la ligne d'alimentation du dispositif de fort cisaillement mentionné précédemment, contenant la phase aqueuse dans laquelle est dissous, émulsifié et/ou dispersé l'agent bloquant ou le mélange d'agents bloquants, et éventuellement l'agent tensioactif si celui-ci n'est pas ajouté dans la composition isocyanate.

Dans une autre variante du procédé, la composition polyisocyanate non bloquée ou partiellement bloquée est introduite dans la ligne d'alimentation du dispositif de fort cisaillement contenant un pied d'émulsion de polyisocyanate bloqué contenant l'agent masquant.

La phase aqueuse contenant l'agent bloquant ou mélange d'agents bloquants, et éventuellement le tensioactif, est mise avantageusement en circulation sur une cuve agitée présentant une fonction d'homogénisation et de transfert thermique.

La température initiale d'alimentation est la température ambiante. La phase contenant le (poly)isocyanate est additionnée de manière progressive à la phase aqueuse à un débit constant en amont du dispositif à cisaillement élevé.

La durée d'alimentation de la phase dispersée dépend du taux de concentration de l'émulsion.

L'étape b) est avantageusement mise en oeuvre dans un broyeur, de préférence de type colloïdal.

Le temps de séjour dans le broyeur, c'est-à-dire la durée de cisaillement est de préférence d'au moins 10 secondes, avantageusement d'au plus 5 secondes.

On choisira le broyeur de façon à assurer le contrôle du cisaillement dans la gamme décrite. En effet, une valeur de cisaillement trop faible ne permet pas d'atteindre de fines granulométries. Inversement, une valeur trop élevée peut casser l'émulsion ou engendrer des échauffements locaux importants.

L'élévation de température du milieu au-delà d'une certaine température risque en effet d'entraîner l'inversion de l'émulsion. Cette température (température d'inversion) dépend de l'agent tensioactif. Elle est généralement supérieure à 50°C.

Avantageusement, l'étape c) est mise en oeuvre par recirculation de la phase aqueuse dans laquelle est émulsionnée la composition isocyanate sous forme bloquée.

De façon préférée, l'étape c) est poursuivie après la fin de l'addition de la composition isocyanate jusqu'à obtention d'une émulsion stable ayant les caractéristiques de granulométrie mentionnées ci-dessus.

De manière avantageuse, la composition isocyanate est soumise avant l'étape b) à une etape préalable (b1) de cisaillement à un taux (gradient de vitesse) inférieur à 20 000 $s^{-1}$ de préférence inférieur à 10 000 $s^{-1}$ afin d'obtenir une prédispersion des particules de polyisocyanate après mise en contact avec l'agent masquant et avant l'étape à fort cisaillement b).

Il est en effet souhaitable de réaliser l'accroissement de surface des particules de polyisocyanate en deux étapes dans deux zones différentes, pour éviter un accroissement trop brutal de surface des particules par formation instantanée d'une émulsion de très fine granulométrie, qui aboutirait à une instabilité de l'émulsion.

Avantageusement, on utilise à cet effet un mélangeur de type statique qui est choisi pour ses performances de mélange et de cisaillement.

L'étape c) est conduite par passage de l'émulsion obtenue dans plusieurs dispositifs à taux de cisaillement élevé disposés en série, ou, plus avantageusement par recirculation de l'émulsion dans un seul dispositif à taux de cisaillement élevé, ceci dans le but de limiter le temps de séjour d'émulsion dans le dispositif à taux de cisaillement élevé afin d'éviter un accroissement important de la température au-delà de la température d'inversion de l'émulsion.

On préfère que le temps de séjour est tel que la température n'excède pas 50°C, de préférence 40°C.

A la fin de l'étape b), c'est-à-dire avant le passage de l'émulsion obtenue à la fin de l'étape b) dans le dispositif à taux de cisaillement élevé suivant, au cas où ceux-ci sont disposés en série, ou dans le même dispositif dans le cas d'une recirculation, l'émulsion est de préférence refroidie grâce à au moins un moyen de transfert thermique qui peut consister en un(une série de) mélangeur(s) statique(s) disposé(s) en aval du dispositif à taux de cisaillement élevé.

Ce type de mélangeur sera choisi cette fois-ci pour ses performances de transfert thermique.

D'autre part, la régulation de température est également assurée, le cas échéant, par la boucle de recirculation qui permet en outre d'améliorer le mélange des produits (phase aqueuse, tensioactif polyisocyanate bloqué) de rhéologie complexe.

Selon une variante avantageuse de la présente invention, on injecte ou coule ladite composition présentant des fonctions isocyanates libres et de préférence contenant l'agent tensioactif, directement dans le milieu réactionnel constitué d'eau et de l'agent de masquage.

Dans certains cas, ou pourra diluer le (poly)isocyanate dans un solvant de manière à diminuer sa viscosité et faciliter son injection dans le milieu réactionnel. La quantité de solvant sera fonction de l'application visée mais aussi de la capacité du solvant à solubiliser ladite composition présentant des fonctions isocyanates libres (avant, au cours

de ou après la réaction). La quantité de solvant utilisée résiduelle dans l'émulsion finale sera généralement au plus égale à (≤) 50% en masse du total de l'émulsion, de préférence inférieure à 10 % en masse par rapport à la quantité totale de l'émulsion.

Une autre manière également avantageuse de faire consiste à mélanger le tensioactif à ladite composition présentant des fonctions isocyanates libres et à injecter le mélange au milieu réactionnel constitué d'eau et de l'agent de masquage ; toutefois, on prendra garde d'éviter la formation de mousse au cours de l'opération de cisaillement à taux élevé.

Une autre manière de faire consiste à co-injecter ladite composition présentant des fonctions isocyanates libres, seule ou en solution et/ou en mélange avec le tensioactif, avec l'agent de masquage sur un pied d'eau.

Les solvants retenus pour l'application sont choisis parmi la classe des esters, des solvants aromatiques, des éthers, des cétones, sans que cette liste ne soit limitative.

Le point d'ébullition des solvants utilisés sera fonction de l'application visée et sera compris entre 20°C et 300°C, de préférence entre 50°C et 225°C.

Dans certains cas, on pourra utiliser un solvant de bas point d'ébullition en quantité supérieure à celles indiquées ci-dessus pour solubiliser le polyisocyanate, mais dans ce cas, on éliminera une partie de ce solvant soit par distillation classique soit par distillation sous vide partiel, soit par un autre procédé connu de l'homme de l'art.

Pour faciliter l'injection de l'isocyanate ou du polyisocyanate dans le milieu réactionnel, on peut préchauffer le polyisocyanate ou le mélange tel que défini ci-dessus.

Des injections parallèles d'isocyanates ou de sa solution et d'agents de masquage peuvent être réalisées. Les débits de chacun des partenaires seront donc réglés de manière à ce que la quantité molaire, dans le milieu réactionnel, de l'agent de masquage soit de préférence toujours légèrement supérieure à la quantité molaire de fonction isocyanate à masquer.

Le procédé selon l'invention est de type batch/semi-batch, ou de type continu (introduction continue de polyisocyanate dans la phase aqueuse, soutirage continu d'émulsion aqueuse de polyisocyanate masqué).

La concentration d'isocyanate ou de polyisocyanate masqué dans l'émulsion finale, après éventuelle dilution, est comprise entre 10 et 90 % de préférence entre 40 et 80 %, et avantageusement 55 et 75 % (poids/poids).

La présente invention permet d'obtenir des concentrations en fonction isocyanate masquée rapporté à la masse d'eau de l'émulsion très élevée. Ainsi la présente invention permet la préparation d'émulsions qui, rapportées à la masse d'eau utilisée, présentent une fonctionalité élevée. Des valeurs de plus de 3 équivalents isocyanates (notamment aliphatiques) par kg d'eau utilisée ou même 4 équivalents sont aisément obtenues. Les exemples démontrent que l'on peut obtenir couramment des valeurs au moins égales à 5.

Tout isocyanate et polyisocyanate est transformable selon le procédé de la présente invention, mais les polyisocyanates préférés visés par l'invention sont surtout ceux qui comportent majoritairement des molécules dans lesquels au moins une, avantageusement deux, de préférence trois des conditions ci-après sont remplies :

- au moins une, avantageusement deux, des fonctions NCO à protéger sont reliées à un squelette hydrocarboné, par l'intermédiaire d'un carbone saturé ($sp^3$).
- au moins un, avantageusement deux, desdits carbones saturés ($sp^3$) est porteur d'au moins un, avantageusement deux, hydrogène(s), (en d'autres termes il a été trouvé que l'on obtenait de meilleurs résultats lorsque le carbone porteur de la fonction isocyanate était porteur d'un hydrogène, de préférence de deux hydrogènes) ;
- tous les carbones par l'intermédiaire desquels les fonctions isocyanates sont reliées au squelette hydrocarboné, sont des carbones saturés ($sp^3$), lesquels sont avantageusement en partie, de préférence en totalité, porteurs d'un hydrogène, de préférence de deux hydrogènes ;
- sont en particulier bien adaptés ceux qui présentent au moins en partie un squelette isocyanurique ou biuret (que ce squetette soit issu d'un seul ou de plusieurs monomères, voir ci-dessous).

Lorsque les polyisocyanates sont relativement lourds c'est-à-dire qu'ils comportent au moins 4 fonctions isocyanates masquées, les deux premières conditions deviennent :

- au moins un tiers, avantageusement deux tiers, des fonctions NCO à protéger sont reliées à un squelette hydrocarboné, par l'intermédiaire d'un carbone saturé ($sp^3$).
- au moins un tiers, avantageusement deux tiers, desdits carbones saturés ($sp^3$) est porteur d'au moins un, avantageusement deux, hydrogène(s), (en d'autres termes il a été trouvé que l'on obtenait de meilleurs résultats lorsque le carbone porteur de la fonction isocyanate était porteur d'un hydrogène, de préférence de deux hydrogènes).

Les molécules porteuses de fonctions isocyanates masquées ou non dérivent par condensation ou oligomérisation de molécules plus simples qui sont en général constituées d'un squelette hydrocarboné, le plus souvent purement hydrocarboné, et de plusieurs fonctions isocyanates, en général deux. Ces composés sont souvent désignés sous l'appellation de monomère. Ils sont rarement utilisés tels quels.

On procède en général à une précondensation sous l'action d'un composé présentant au moins une fonction à hydrogène mobile (Par exemple eau dans le cas du biuret, polyols ou polyamines) ou à une prépolymérisation (par exemple dimérisation ou oligomérisation comme dans le cas de la formation des cycles isocyanuriques).

Ces squelettes peuvent être issus aussi bien de condensation avec un seul type de monomère (en général diisocyanate) que plusieurs types de monomères. Il est préférable qu'il y ait au moins un monomère dont au moins une des fonctions isocyanates soit aliphatique [carbone porteur de la fonction isocyanate d'hybridation ($sp^3$)et avantageusement porteur d'au moins un, de préférence deux, hydrogène(s)]. Ce sont surtout ces fonctions aliphatiques qu'il est préférable de masquer par les techniques de l'invention, les autres fonctions isocyanate pouvant être masquées par des techniques déjà connues en elles-mêmes.

Une sous-famille vise les isocyanates issus d'une prépolymérisation avec des polyols, en général des triols ou des polyamines, en général des triamines, avec un polyisocyanate, en général diisocyanate, la quantité de fonction isocyanate étant supérieure à celle des fonctions à hydrogène mobile (comme les amines etlou les alcools), de manière qu'à la fin de la prépolymérisation le nombre de fonctions isocyanates résiduelles par molécule, soit en moyenne supérieur à deux, avantageusement au moins égal à 2,5 ; de préférence au moins égal à trois.

Conformément à une modalité avantageuse de l'invention, les polyisocyanates dont les NCO sont destinés à être protégés par les radicaux masquants, sont choisis parmi les produits d'homo- ou d'hétéro-condensation d'alcoylènediisocyanate, comprenant notamment des produits du type "BIURET' et du type "TRIMERES". voire "PREPOLYMERES" à fonction isocyanates comportant notamment des fonctions urée, uréthane, allophanate, ester amide, et parmi les mélanges en contenant.

Il peut s'agir, par exemple, des polyisocyanates commercialisés par la Société demanderesse sous la dénomination "TOLONATE".

De manière générale, les polyisocyanates préférés sont les produits d'homo- ou d'hétéro-condensation des isocyanates monomères suivants

- 1,6-hexaméthylène diisocyanate,
- 1,12-dodécane diisocyanate,
- cyclobutane 1,3-diisocyanate,
- cyclohexane 1,3 et/ou 1,4-diisocyanate,
- 1-isocyanato 3, 3,5-triméthyl-5-diisocyanato-méthyl cyclohexane (isophorone diisocyanate), IPDI),
- 2,4 et/ou 2,6-hexahydrotoluylène diisocyanate,
- hexahydro 1,3- et/ou 1,4-phénylène diisocyanate,
- perhydro 2,4'- et/ou 4,4'-diphénylméthane diisocyanate,
- 1,3- et/ou 1,4-phénylène diisocyanate,
- 2,4- et/ou 2,6-toluylène diisocyanate,
- diphénylméthane 2,4'- et/ou 4,4'-diisocyanate,
- isocyanato (4)-méthyl octylène, diisocyanate (LTI ou NTI),
- triphénylméthane 4,4',4"-triisocyanate,
- 1,3-bisisocyanatométhyl cyclohexane,
- bis-isocyanato méthyl norbornane (NBDI),
- 2-méthyl-pentaméthylène disocyanate.

Selon une mise en oeuvre possible, et parfois avantageuse de la présente invention, si l'on désire obtenir directement des émulsions comportant d'autres composant(s), notamment ceux des formulations pour revêtement(s) telles que celles pour peinture(s) et vernis, on peut les introduire, dès lors qu'ils n'interfèrent pas avec la réaction (et vice versa), dans la phase aqueuse (par exemple dans le pied de cuve), dans l'émulsion ou/et dans la phase organique, avant ou pendant la réaction.

Ceci est particulièrement intéressant dans le cas des polyols qui, ne présentant de pKa dans les fourchettes ci-dessus (relative au pKa de l'agent de masquage, voir détail ci-après), peuvent alors être introduits, soit au début, soit en cours de réaction, soit bien sûr à la fin. Pour ce faire il est préférable que le pKa des fonctions ol(s) du polyol ou des polyols présente(nt) un pKa au plus égal à celui de l'agent masquant (ou, dans le cas où il y a plus de d'un agent masquant, le pKa le plus élevé des agents masquants) augmenté de deux, avantageusement de 3, de préférence de 4 unités. La composition peut comporter en outre un catalyseur avantageusement latent (libérable par action des agents extérieurs, par exemple rayonnement visible ou U.V., oxygène).

L'invention a également pour objet une installation pour la mise en oeuvre du procédé selon l'invention, ladite

installation comprenant au moins:

- un moyen de cisaillement, de préférence un broyeur, avantageusement un broyeur colloïdal susceptible de générer un taux de çisaillement (gradient de vitesse) supérieur à 1 000 $s^{-1}$, de préférence supérieur à 20 000 $s^{-1}$ et inférieur à 1 000 000 $s^{-1}$, de préférence inférieur à 200 000 $s^{-1}$; et
- des moyens d'injection d'une composition isocyanate dans une phase aqueuse.

Avantageusement, l'installation comprend également un ou plusieurs des moyens suivants :

- des moyens de recirculation de la phase aqueuse sous forme d'émulsion de (poly)isocyanate masqué ;
- des moyens de régulation du débit d'injection de la composition isocyanate dans la phase aqueuse ;
- des moyens d'homogénéisation de l'émulsion ;
- des moyens de refroidissement du système ; et
- des moyens de soutirage de l'émulsion aqueuse de polyisocyanate masqué.

Le schéma d'une installation de ce type et du procédé selon l'invention est représenté à la figure 1 annexée.

Le broyeur 1 est de préférence un broyeur colloïdal. Ce dispositif se présente avantageusement sous la forme d'un jeu de mâchoires coniques et comprend un rotor et un stator séparés par une entrefer très faible. Il dispose de préférence de dentures croisées pour augmenter le taux de cisaillement.

La géométrie des cônes, l'entrefer, la vitesse de rotation du broyeur sont choisis en fonction de la plage de taux de cisaillement recherché et donc de la granulométrie souhaitée.

Les moyens d'injection d'une composition polyisocyanate comprennent avantageusement un bac de prémélange 2 dans lequel le polyisocyanate est mélangé avec le tensioactif, le cas échéant et éventuellement, avec un ou plusieurs solvants. Le bac de prémélange est de préférence relié à une source d'azote 3.

Ils comprennent également une conduite 4 d'arrivée de la composition polyisoyanate au contact de l'agent masquant en phase aqueuse, ici vers la boucle de recirculation 5, et une pompe 6 destinée à régler le débit d'injection de la composition polyisocyanate sur la boucle de recirculation.

Les moyens de recirculation comprennent une boucle de recirculation 5 alimentée en eau additionnée d'au moins une partie de l'agent bloquant et, le cas échéant, de l'agent tensioactif au moyen d'une cuve (ou bac) agitée 7. Celle-ci est alimentée à son tour par une cuve 8 de stockage de l'agent bloquant et est éventuellement reliée à une source d'alimentation en agent tensioactif (non représentée). La cuve 8 contenant l'agent bloquant est placée sous atmosphère d'azote au moyen d'une source d'azote 9.

La cuve 7 comprend avantageusement des moyens d'agitation prévus sur deux étages, l'étage inférieur comprenant une turbine à quatre pâles inclinées 10 et l'étage supérieur une turbine de type Mixel TT 11.

Cette disposition particulière est adaptée à la rhéologie variable du milieu (milieu initialement newtonien, puis non-newtonien pour l'émulsion finale).

Les moyens d'agitation 10 et 11 produisent une agitation modérée de manière à réaliser une homogénisation de la phase aqueuse au début du procédé et de l'émulsion aqueuse de (poly)isocyanate masqué lorsque le procédé a atteint un régime permanent. La cuve 7 est reliée à une source d'azote 12. Avantageusement, la cuve 7 comprend également une double enveloppe 13 destinée à assurer un échange thermique.

La boucle de recirculation 5 comprend également en aval du broyeur 1 avantageusement un mélangeur statique 15 dont la fonction est essentiellement d'échange thermique.

Le débit d'alimentation du broyeur est réglé au moyen d'une pompe 16 placée à la sortie du bac agité 6.

L'objectif de la pompe 16 est de réguler le débit traversant le broyeur colloïdal 1. L'effet de pompage du broyeur colloïdal 1 reste plus faible que celui d'une pompe. En conséquence, des variations de débit très importantes peuvent exister entre la solution initiale, ayant approximativement la viscosité de l'eau, et l'émulsion finale dont la rhéologie est fonction du taux de concentration en matières solides et de la granulométrie. La pompe 16 a pour fonction de pallier à ces écarts importants qui entraîneraient sinon des différences importantes de la fréquence de recirculation, donc de cisaillement du produit.

Le mélangeur statique 15 installé en aval du broyeur colloïdal 1 a pour but de pallier au développement de points de surchauffe dans la boucle de recirculation.

Conformément à l'invention, au début du procédé, l'eau contenue dans la cuve 7 additionnée d'une partie de l'agent masquant contenu dans le réservoir de stockage et éventuellement d'une partie du tensioactif 7 est mise à circuler dans la boucle de recirculation 5.

La composition polyisocyanate additionnée de l'agent tensioactif et du solvant est ensuite injectée dans la boucle de recirculation 5 au moyen de la conduite 4 et de la pompe 6.

Les réactions de masquage et mise en émulsion débutent immédiatement après la mise en contact. L'émulsion obtenue est refroidie dans la série de mélangeurs statiques 15, puis revient dans la cuve agitée 7, où elle est

homogénéisée sous l'action des moyens d'agitation 10 et 11 et refroidie par l'effet d'une double enveloppe 13.

L'émulsion est à nouveau remise en circulation dans la boucle de recirculation 5 où elle est progressivement enrichie en polyisocyanate masqué sous l'action de cisaillement du broyeur colloïdal 1, qui a également pour effet que les gouttelettes qui la constituent voient leur taille et leur indice de dispersion réduits jusqu'à l'obtention de l'émulsion finale qui est alors soutirée de l'installation de façon discontinue ou continue.

L'invention a également pour objet une composition comportant une émulsion de polyisocyanate(s) masqué(s), caractérisée par le fait qu'elle est susceptible d'être obtenue par mise en oeuvre du procédé selon l'invention et par le fait qu'elle présente au plus 60 %, avantageusement au plus 50 % en masse d'eau.

La composition selon l'invention se caractérise également par une viscosité de l'émulsion finale inférieure à 5 500 mPa.s à au moins 68 % d'extrait sec, à 25°C, et avantageusement inférieure à 1 000 mPa.s à au moins 60 % d'extrait sec, à 25°C.

La composition selon la présente invention peut comporter divers additifs utiles pour les peintures ; ces additifs ainsi que cela est mentionné ci-dessus peuvent être introduits dans le mélange réactionnel mais sont plus souvent introduits après l'opération de masquage.

La composition d'isocyanate selon l'invention peut comporter après mise en dispersion ou émulsion dans une phase aqueuse, une teneur en eau de 10 à **90** % et est en général, de type huile dans eau, ce qui est avantageux

La phase aqueuse de l'émulsion, sert en général de vecteur des co-réactifs polycondensables avec les fonctions isocyanates et comporte alors des composés présentant des fonctions à hydrogènes réactifs, en général un ou plusieurs polyols, qui peuvent être ajoutés à la phase aqueuse avant la réaction de masquage et mise en émulsion simultanées, ou ajoutés à un stade ultérieur.

Ce polyol est un polymère qui contient au moins 2 groupements hydroxyles (phénol ou alcool) ayant avantageusement un taux d'hydroxyle entre 0,5 et 5, avantageusement entre 1 et 3 % (en masse).

Le squelette du polymère peut être de nature chimique diverse notamment acrylique, polyester, alkyde, polyuréthanne.

Il peut comporter des groupements carboxyliques ou sulfoniques ou pas de groupement ionique.

Le polyol peut déjà être en milieu aqueux ou hydrosoluble ou hydrodispersable.

Il peut s'agir d'une solution aqueuse (qui peut notamment être obtenue après neutralisation des groupements ioniques) ou d'une émulsion du polymère dans l'eau ou d'une dispersion de type latex.

Le polyol est avantageusement un latex de taille nanométrique présentant les caractéristiques suivantes :

$d_{50}$ compris entre 15 et 60 nm, avantageusement entre 20 et 40 nm
fonction carboxylate de 0,5 à 5 % en masse
fonction ol : entre 1 et 4 % avantageusement entre 2 et 3 %
taux de solide : entre 25 et 40 %
un $d_{80}$ inférieur à 1 micromètre

Le rapport molaire entre les fonctions isocyanates libres et les fonctions hydroxyles est compris entre 0,5 et 2,5, avantageusement entre 0,8 et 1,6, avantageusement entre 1 et 1,4.

Le rapport massique entre les isocyanates à mettre en suspension et ledit composé comportant une fonction anionique et un fragment de chaîne polyéthylène glycol est le plus souvent au plus égal à 1/3 avantageusement au plus égal à environ 20%, de préférence à environ 10% (dans la présente description le terme "environ" est employé pour mettre en exergue le fait que, lorsque le, ou les, chiffres les plus à droite d'un nombre sont des zéros, ces zéros sont des zéros de position et non des chiffres significatifs, sauf bien entendu s'il en est précisé autrement).

Le rapport massique entre les isocyanates à mettre en suspension et ledit composé comportant une fonction anionique et un fragment de chaîne polyéthylène glycol est avantageusement supérieur à 1 %, de préférence à 2 %.

Ainsi, le rapport massique entre les isocyanates à mettre en suspension et ledit composé comportant une fonction anionique et un fragment de chaîne polyéthylène glycol est avantageusement compris entre 2 % et 20 %, de préférence entre 4 et 10 %.

Selon une mise en oeuvre particulièrement avantageuse de la présente invention, après mise en dispersion ou émulsion, la somme des teneurs en masse du ou des isocyanates, du ou des émulsifiant(s) et du ou des polyol(s) dans l'eau varie de 30 à 70 %.

Ces polyols peuvent en outre constituer des agents tensioactifs.

**TEST A L'OCTANOL**

**définitions**

| | |
|---|---|
| Température de "libération" (ou de "déblocage") | c'est la température la plus faible à laquelle l'agent de masquage de l'isocyanate masqué est déplacé à hauteur de 9/10 (arrondi mathématique) par un monoalcool primaire (l'alcool primaire est en général l'octanol). |
| durée de vie au stockage | Pour s'assurer une bonne durée de vie au stockage, il est préférable de choisir des fonctions isocyanates masquées dont le test à l'octanol montre une "libération" à 80°C, avantageusement à 90°C, au plus égale à 90 %. |
| Avancement de la réaction | On considère que la réaction est complète si elle est réalisée à plus de 90 %. |

**Mode opératoire**

Dans un tube, type SCHOTT, avec agitation magnétique, on charge environ 5 mmol en équivalent NCO masqué protégé à évaluer.
On ajoute 2,5 à 3 ml de dichloro-1,2 benzène (solvant) l'équivalent d'octanol-1 (5 mmol, soit 0,61 g et éventuellement avec le catalyseur à tester avec le groupe masquant).
Le milieu réactionnel est ensuite porté à la température testée. On chauffe alors pendant 6 h à la température testée, de façon à débloquer et ainsi rendre réactives les fonctions isocyanates. La réaction terminée, le solvant est éliminé par distillation sous vide, et le résidu est analysé en RMN, Masse et infra rouge.
A partir de ces données, on évalue le pourcentage de fonction isocyanate masquée condensée avec l'octanol-1.
La composition selon la présente invention peut également comprendre un catalyseur de libération du groupe masquant, avantageusement latent, et qui ne sera activé que lors de la réaction de polycondensation du (poly)isocyanate masqué avec des composés présentant des fonctions à hydrogène réactif, notamment sous l'effet de la température de polycondensation.
L'invention a en outre pour objet un procédé d'utilisation des compositions ci-dessus décrites comportant les étapes suivantes :

- application d'une composition selon l'invention sous forme d'une couche d'épaisseur comprise entre 20 µm et 200 µm, et
- chauffage à une température au moins égale à 80°C.

L'invention a enfin pour objet un revêtement obtenu par le procédé défini ci-dessus.
Les exemples ci-après illustrent le procédé selon l'invention.
Les expériences décrites dans les exemples 1 à 7 suivants ont été effectuées dans un réacteur équipé d'un mélangeur et d'une boucle de recirculation comprenant un ultra-turrax toumant à une vitesse soit de 8.000 tours/minute soit de 13.500 tours/minute. Certains réactifs sont introduits dans le réacteur au début de l'expérience et d'autres progressivement au cours de l'expérience. Ceci sera précisé pour chacun des exemples. L'ensemble du dispositif est thermostaté à une température précisée dans chacun des exemples.
Sauf quand cela est autrement précisé l'addition est réalisée, à débit constant sur une période de une heure et demie. La cinétique du blocage est d'ordre 1 et dans le cas de la meko dans la première moitié de l'addition on peut estimer qu'en une minute 10 à 20% de l'isocyanate initialement présent ont réagi. On peut donc estimer que la quantité d'isocyanate libre est au plus égale à la quantité introduite pendant dix minutes.
Une demi-heure après la fin de la réaction la réaction est considérée comme terminée.
Le tensioactif Rhodafac® RE610 (dont les composants majoritaires répondent à la formule 1) est une alcoyiphénol éthoxylé phosphaté et l'Antarox® 461P est un alcoylphénol propoxylé éthoxylé.

**Exemple 1**

153,05 g de produit désigné par l'acronyme anglo-saxon "MEKO" . (Méthyléthylcétoxime ou plus exactement

butanoxime-2) et 216,5 g d'eau sont versés dans le réacteur qui est thermostaté à 25°C. D'autre part 324 g de HDT et 16,2 g d'acétate de butyle (AcOBu) et 13 g de Rhodafac RE610® et 3,7 g de triéthylamine (NEt3) sont mélangés au préalable. Ce mélange est ajouté progressivement dans le réacteur (vitesse de flux 3,34 g/min ≅ 0,017 moles NCO/min). La vitesse de l'Ultraturrax® est de 8.000 tours/min. Après 1 heure 37 minutes d'addition, le mélange est broyé pendant une heure supplémentaire.

L'émulsion de polyisocyanates masqués ainsi obtenue est une émulsion directe caractérisée par une granulométrie moyenne de 1,56 µm. Elle ne contient pas d'urée résiduelle et elle contient un excès d'agent bloquant de 1,55%.

**Exemple 2**

153,05 g de produit désigné par l'acronyme anglo-saxon "MEKO" (Méthyléthylcétoxime ou plus exactement butanoxime-2) et 216,5 g d'eau sont versés dans le réacteur qui est thermostaté à 25°C. D'autre part 324 g de HDT et 16,2 g d'acétate de butyle (AcOBu) et 13 g de Rhodafac RE610® et 3,7 g de triéthylamine (NEt3) et 1,3 g de dodécyl sulfate de sodium (SDS) sont mélangés au préalable. Ce mélange est ajouté progressivement dans le réacteur (1 heure 30 min). La vitesse de l'Ultraturrax® est de 8.000 tours/min.

L'émulsion obtenue est une émulsion directe caractérisée par une granulométrie moyenne de 1,62µm. Elle ne contient pas d'urée résiduelle et contient un excès d'agent bloquant de 1,38 %.

**Exemple 3**

153,05 g de produit désigné par l'acronyme anglo-saxon "MEKO" (Méthyléthylcétoxime ou plus exactement butanoxime-2) et 216,5 g d'eau ainsi que 6,5 g de Rhodafac RE610® et 1,85 g de TEA sont versés dans le réacteur qui est thermostaté à 45°C. D'autre part 324 g de HDT et 16,2 g d'acétate de butyle (AcOBu) et 6,5 g de Rhodafac RE610® et 1,85 g de triéthylamine (NEt3) sont mélangés au préalable. Ce mélange est ajouté progressivement dans le réacteur (52 min). La vitesse de l'Ultraturrax® est de 8.000 tours/min.

L'émulsion obtenue est une émulsion directe caractérisée par une granulométrie moyenne de 3µm contenant des gouttes d'émulsion multiple eau/huile/eau. Elle ne contient pas d'urée résiduelle et contient un excès d'agent bloquant de 1,2 %.

**Exemple 4**

153,05 g de produit désigné par l'acronyme anglo-saxon "MEKO" (Méthyléthylcétoxime ou plus exactement butanoxime-2) et 216,5 g d'eau sont versés dans le réacteur qui est thermostaté à 25°C. D'autre part 324 g de HDT et 16,2 g d'acétate de butyle (AcOBu) et 16,2 g de Rhodafac RE610® et 5,7 g de triéthylamine (NEt3) sont mélangés au préalable. Ce mélange est ajouté progressivement dans le réacteur. La vitesse de l'Ultraturrax® est de 8.000 tours/min.

L'émulsion obtenue est une émulsion directe caractérisée par une forte polydispersité autour de deux valeurs moyennes de 1,56µm et 15µm. De plus cette émulsion contient des gouttes d'émulsion multiple eau/huile/eau. Elle contient un peu d'urée.

**Exemple 5**

153,05 g de MEKO et 216,5 g d'eau sont versés dans le réacteur qui est thermostaté à 25°C. D'autre part 324,3 g de HDT et 16,2 g de Rhodafac RE610® et 5,7 g de triéthylamine (NEt3) sont mélangés au préalable. Ce mélange est ajouté progressivement dans le réacteur (1 heure 35 min). La vitesse de l'Ultraturrax® est de 13.500 tours/min.

L'émulsion obtenue est une émulsion directe caractérisée par une granulométrie moyenne de 1,5µm contenant une petite population de particules de diamètre supérieur à 10µm. Elle ne contient pas d'urée résiduelle et contient un excès d'agent bloquant de 1,43 %.

**Exemple 6**

153,05 g de MEKO et 216,5 g d'eau et 13 g de Rhodafac RE610® et 3,7 g de triéthylamine (NEt3) sont versés dans le réacteur qui est thermostaté à 45°C. D'autre part 324 g de HDT et 16,2 g d'acétate de butyle (AcOBu) sont mélangés au préalable. Ce mélange est ajouté progressivement dans le réacteur (1 heure 10 min). La vitesse de l'Ultraturrax®est de 13.500 tours/min.

L'émulsion obtenue est une émulsion directe caractérisée par une granulométrie moyenne de 2,5µm avec

une population ayant un diamètre supérieur à 10µm. Elle ne contient pas d'urée résiduelle et contient un excès d'agent bloquant de 0,95 %.

**Exemple 7**

Un mélange A est préparé à la composition suivante : 13 g de Rhodafac RE610®, 3,7 g de NEt3, 153,05 g de MEKO et 216,5 g d'eau.

120 g du mélange A sont versés dans le réacteur qui est thermostaté à 25°C. D'autre part 324 g de HDT et 16,2 g d'acétate de butyle (AcOBu) sont mélangés au préalable. Ce mélange est ajouté progressivement dans le réacteur. Simultanément 266,25 g du mélange A sont ajoutés progressivement au réacteur (1 heure 50 min). La vitesse de l'Ultraturrax® est de 8.000 tours/min.

L'émulsion obtenue est une émulsion directe caractérisée par une granulométrie moyenne de 1,41µm. Elle ne contient pas d'urée résiduelle et contient un excès d'agent masquant de 2,19 % .

Les résultats suivants ont été obtenus sur une installation pilote.

**Exemple 8**

1. Descriptif de l'installation:

L'installation pilote est constituée d'une cuve agitée à fond GRC d'une capacité de 100 l avec une boucle de recirculation comme illustré sur la figure 1 annexée. La cuve est placée sous atmosphère inerte d'azote. La boucle comprend, dans le sens de passage du fluide, une pompe de gavage 6, le point d'injection de la phase à disperser, un broyeur colloïdal 1, une série de mélangeurs statiques pour le transfert thermique 15. L'aspiration de la boucle de recirculation est centrale en fond de cuve. Son refoulement se situe sur le dôme. Une autre cuve 2, également placée sous atmosphère inerte, contient la phase à disperser. Le pilote est pourvu d'instruments de mesure de la température, pression, débits et alarmes pression/température.

2. Réactifs :

La phase polyisocyanate est constituée de l'HDT, de solvant (5 % d'acétate de butyle en poids par rapport à l'HDT), de tensioactif (RHODAFAC® RE610, polyoxyéthylène nonylphényl éther phosphate, neutralisé avec la triéthylamine).

La phase continue est constituée d'eau déminéralisée et d'agent bloquant (MEKO). La MEKO est au maximum en excès de 0,6 % en poids. Elle est partiellement soluble dans l'eau. La solution initiale est sursaturée. La viscosité initiale est voisine de celle de l'eau. Elle augmente progressivement au cours du procédé lorsque l'on concentre l'émulsion. La rhéologie finale dépend du taux de concentration et de la distribution granulométrique de l'émulsion.

3. Conditions opératoires :

On part d'un pied d'émulsion pour éviter une trop grande proportion de fonctions isocyanates vraies dans le mélange réactionnel.

Le débit de recirculation peut varier entre 400 et 1500 kg/h.

Le débit d'alimentation de la phase à disperser est compris entre 10 et 60 Kg/h. La durée d'alimentation de la phase dispersée dépend du taux de concentration de l'émulsion. La masse totale du batch est de 80 kg. La concentration de polyisocyanates masqués finale est de l'ordre de 65 % en poids. La température d'alimentation de la phase à disperser est d'environ 20°C (température ambiante). La température du milieu varie entre 15-20° et 40°C maximum. Son entrefer s'élève de 50 à 200 µm. La pression à l'aspiration du broyeur est maintenue supérieure à 0,2 bar ($2.10^4$ Pa). La contrepression est fixée par les pertes de charge dans les premiers essais.

Les essais effectués sont détaillés au tableau 1 ci-dessous.

Tableau 1 :

| Essais pilotes effectués. | | | |
|---|---|---|---|
| Essais | 1 | 2 | 3 |
| Premix Phase à disperser | HDT+5% AcOBu*+5%TA | HDT+5% AcOBu*+5% TA | HDT+5% AcOBu* |
| Cuve émulsion Solution initiale | Eau déminéralisée + MEKO | Eau déminéralisée + MEKO | Eau déminéralisée + MEKO +5 % TA |
| Durée d'agitation après fin alimentation (min) | 80 | 75 | 75 |
| excès de MEKO (%)*** | 0.6 | 0.6 | o |
| Broyeur entrefer/vitesse (µm/rpm) | 80-90 3000 | 80-90 3000 | 80-90 3000 |
| Débit de recirculation min/max (kg/h | 400/1500 | 400/1500 | 400/1100 |
| Débit d'alimentation Premix (kg/h) | 30 | 30 | 30 |
| Température d'alimentation Premix (°C) | 20 | 20 | 20 |
| Température cuve émulsion initiale/finale (°C) | 17-35 | 19-37 | 18-36 |

Légende :
* AcOBu : acétate de n-butyle
TA : tensioactif RHODAFAC® RE610 neutralisé triéthylamine (RE60/REA : 77,8 %/22,2%
*** : % massique par rapport à la masse totale de l'émulsion.

Le nettoyage de l'installation s'effectue à l'eau pour la partie boucle de recirculation et cuve de l'émulsion, et au solvant (acétone, acétate de butyle) pour la partie cuve Premix et ligne d'alimentation. Après chaque essai, le pilote est inspecté afin d'évaluer l'efficacité du nettoyage.

4. Résultats :

Les résultats granulométriques et les analyses chimiques des différents essais sont résumés respectivement dans les tableaux 3 et 4.

Tableau 2 :

| Résultats granulométriques | | | |
|---|---|---|---|
| Essai | 1 | 2* | 3 |
| Diamètre de Sauter $d_{32\ \mu m}$ | 0,84 | 0,53 | 1,78 |
| Diamètre à 90 % de la population (µm) | 1,87 | 1,27 | 13,33 |
| Diamètre à 10 % de la population (µm) | 0,48 | 0,28 | 0,80 |
| Largeur de dispersion : $d_{90}$-$d_{10}$ (µm) | 1,39 | 0,99 | 12,53 |

* tensioactifs : ANTAROX® 461P + 2 % SDS, 10 % de solvant SOLVESSO/RPDE®

Tableau 3 :

| Analyses chimiques | | | |
|---|---|---|---|
| Analyses | 1 | 2 | 3 |
| MEKO résiduel (% masse émulsion) | 2,2 | 1,7 | 0,87 |
| NCO résiduel (%) | 0 | 0 | 0 |
| Lourds bloqués MEKO (%) | 50,3 | 49,0 | 50,6 |
| Trimère bloqué MEKO (%) | 49,4 | 50,2 | 48,7 |
| Monomères bloqués MEKO (%) | 0,1 | 0,5 | 0,5 |
| Rapport C=O blocage/ C=O Trimère*** (%) | 0,79 | 0,787 | 0,793 |

*** : rapport de l'absorbance des bandes pour le Tolonate® D2:0.851.

Après l'alimentation de la phase à disperser, une période d'agitation supplémentaire entraîne un affinage de l'émulsion. La largeur de distribution de l'émulsion est également réduite au cours de cette étape. Les variations granulométriques correspondantes sont représentées à la figure 2.

Le diamètre $d_{10}$ (diamètre à 10 % de la population) diminue très légèrement au cours de l'affinage (il est fixé par le cisaillement maximal du système). En revanche, le diamètre $d_{90}$ (diamètre à 90 % de la population) présente de fortes variations. Il est responsable de la réduction de la largeur de dispersion et du diamètre de Sauter $d_{32}$. La recirculation de l'émulsion dans la zone de cisaillement assure un fractionnement des grosses gouttelettes. Ce phénomène provoque ainsi une homogénéisation de la distribution de taille des particules. Après une durée d'environ 65 à 70 minutes, la granulométrie n'évolue plus. Ces variations vont dans le sens d'une meilleure stabilité de l'émulsion (largeur de dispersion réduite).

L'émulsion finale présente un taux de MEKO résiduel supérieur à l'excès initial. De l'urée se forme donc très légèrement dans le milieu. Le taux de MEKO résiduel décroît pendant la durée d'agitation post-alimentation. La réaction de blocage se termine durant la période d'affinage de l'émulsion.

L'augmentation du taux de concentration assure un accroissement des contraintes de cisaillement. D'autre part, l'utilisation d'un éjecteur pour l'alimentation de la phase à disperser améliore la qualité de mélange au point d'injection. Un meilleur contact entre les deux fluides (phase à disperser, phase aqueuse) augmente par ailleurs la cinétique (réaction amorcée à l'interface et résistance diffusionnelle). Ces deux modifications apportent une réduction importante de la granulométrie (diamètre de Sauter et largeur de dispersion : $d_{32}$= 0,53 µm, $d_{90}$-$D_{10}$= 0,99 µm - essai 2). Les valeurs d'usage du produit correspondant présentent une nette amélioration, en particulier de la brillance.

**Revendications**

**1.** Procédé de synthèse en émulsion de (poly)isocyanates masqués comprenant l'étape consistant à :

a) mettre en contact une composition isocyanate présentant des fonctions isocyanates libres avec, au moins un agent masquant A en présence d'un tensioactif 8 et d'une phase aqueuse, ladite composition isocyanate étant ajoutée progressivement à au moins une partie de la phase aqueuse et au moins une partie de l'agent de masquage et de telle façon que la teneur en fonctions isocyanates libres soit au plus égale à 2 équivalents par kg dans la phase isocyanate.

**2.** Procédé selon la revendication 1, **caractérisé par le fait que** ladite composition isocyanate comporte en moyenne 1 à 5 fonctions isocyanates par molécule porteuse de fonction (s) isocyanate (s).

**3.** Procédé selon les revendications 1 et 2, **caractérisé par le fait que** ladite composition isocyanate comporte en moyenne 4/3 à 4 fonctions isocyanstes par molécule porteuse de fonction(s) isocyanate(s).

**4.** Procédé selon les revendications 1 à 3, **caractérisé par le fait que** ledit agent masquant présente au moins un hydrogène mobile.

**5.** Procédé selon les revendications 1 à 4, **caractérisé par le fait que** ledit agent masquant présente au moins un hydrogène, mobile et **par le fait que** le pKa des hydrogènes réactifs est au moins égal à 4, avantageusement à

5, de préférence à 6 et **par le fait que** ledit pKa est au plus égal à 14, avantageusement à 13, de préférence à 12, et de manière plus préférée à 10, à l'exclusion des lactames.

**6.** Procédé selon les revendications 1 à 5, **caractérisé par le fait que** le pH de la phase aqueuse est maintenu pendant la durée de la réaction à une valeur au plus égale à 12, avantageusement à 11, de préférence à 10.

**7.** Procédé selon les revendications 1 à 6, **caractérisé par le fait que** le pH de la phase aqueuse est maintenu pendant la durée de la réaction à une valeur au moins égale à la valeur (pKa -2), avantageusement au moins égale à la valeur (pKa -1), de préférence au moins égale à la valeur du pKa du ou d'un des agent(s) masquant(s).

**8.** Procédé selon les revendications 1 à 7, **caractérisé par le fait que** la réaction est menée à une température au plus égale à la température de point de trouble du tensioactif ou du mélange de tensioactifs utilisé.

**9.** , Procédé salon les revendications 1 à 8, **caractérisé par le fait que** la dite composition isocyanate comporte un solvant, y compris un mélange de solvants.

**10.** Procédé selon les revendications 1 à 9, **caractérisé par le fait que** la mise en contact est faite sous agitation au moyen d'un dispositif mélangeur dans des conditions assurant que 90 % en masse, avantageusement 95 % en masse des particules soient d'une comprise entre 0,005 et 50 micromètres.

**11.** Procédé selon la revendication 10, **caractérisé par le fait que** l'agitation est menée au moyen d'un mélangeur broyeur.

**12.** Procédé selon les revendications 1 à 11, **caractérisé par le fait que** le mélange réactionnel est soumis à une recirculation.

**13.** Procédé selon les revendications 1 à 12, **caractérisé par le fait que** le mélange réactionnel est soumis à une recirculation au cours de laquelle le mélange réactionnel est soumis à l'action d'un mélangeur broyeur.

**14.** Procédé selon les revendications 1 à 13, **caractérisé par le fait que** ladite mise en contact est réalisée par addition de réactif(s) à au moins une phase aqueuse et au moins une partie de(s) agent(s) masquant(s).

**15.** Procédé selon les revendications 1 à 14, **caractérisé par le fait que** ladite mise en contact est réalisée par addition de réactif(s) à un milieu contenant au moins une phase aqueuse, au moins une partie de(s) agent(s) tensioactif (s) et au moins une partie de(s) agent(s) masquant(s).

**16.** Procédé selon l'une des revendications 1 à 15, comportant en outre les étapes consistant à:

b) soumettre le mélange obtenu en a) à un cisaillement (gradient de vitesse) supérieur à 1 000 $s^{-1}$ de préférence supérieur à 20 000 $s^{-1}$ et inférieur à 1 000 000 $s^{-1}$, de préférence inférieur à 200 000 $s^{-1}$ ; et
c) répéter l'étape b), éventuellement après avoir répété l'étape a) jusqu'à obtention d'une émulsion stable. dont les particules présentant un diamètre de Sauter supérieur à 0,1 µm, de préférence 0,2 µm et inférieur à 5 µm, de préférence inférieur à 2 µm et une largeur de dispersion inférieure à 5 µm

**17.** Procédé selon la revendication 16, **caractérisé en ce que** l'étape c) est poursuivie après la fin de l'addition de la composition isocyanate.

**18.** Procédé selon la revendication 17, **caractérisé en ce que** l'étape c) est effectués par recirculation de l'émulsion obtenue à la fin de l'étape b).

**19.** Procédé selon l'une quelconque des revendications 16 à 18, **caractérisé en ce que** le mélange réactionnel est soumis à une recirculation dans un broyeur colloïdal.

**20.** Procédé selon la revendication 19, **caractérisé en ce que** la phase aqueuse additionnée de la composition isocyanate contenant éventuellement l'agent tensioactif et/ou un solvant est soumis à un premier cisaillement (gradient de vitesse) inférieur à 20 000 $s^{-1}$,de préférence inférieur à 10 000 $s^{-1}$ après mise en contact avec l'agent masquant et avant l'étape à fort cisaillement b).

**21.** Procédé selon l'une quelconque des revendications 1 à 20, **caractérisé en ce qu'**il est mis en oeuvre à une température inférieure à 50°C, de préférence inférieuré à 40°C.

**22.** Procédé selon l'une quelconque des revendication 1 à 21, **caractérisé en ce que** l'agent tensioactif est ajouté à la composition isocyanate en une proportion inférieure à 20 % en poids, de préférence inférieure à 10 % en poids, par rapport au poids de la composition isocyanate à masquer.

**23.** Procédé selon les revendications 1 à 22, **caractérisé par le fait que** ledit agent tensioactif est un agent, présentant une fonction anionique.

**24.** Procédé selon les revendications 1 à 23, **caractérisé par le fait que** ledit agent tensioactif est un agent anionique présentant au moins une fonction choisie parmi les phosphates d'aryle(s) et/ou d'alcoyle (s) et les aryl- ou alcoyl-phosphonate et phosphinate.

**25.** Procédé selon les revendications 1. à 24, **caractérisé par le fait que** l'agent tensioactif est un composé comportant une fonction anionique et un fragment de chaîne, polyéthylène glycol et/ou polypropylène glycol d'au moins 1, avantageusement au moins 5, de préférence d'au moins 7 unités éthylènyloxyles et/ou propylènyloxyles.

**26.** Procédé selon les revendications 1 à 25, **caractérisé par le fait que** ledit composé comporte une partie hydrophile formée de ladite fonction anionique, dudit fragment de chaîne polyéthylène glycol et/ou polypropyléne glycol et d'une partie lipophile à base d'un radical hydrocarboné.

**27.** Procédé selon la revendication 26, **caractérisé par le fait que** ladite partie lipophile est choisie parmi les groupes alcoyles et aryles.

**28.** Procédé, selon les revendications 1 à 27, **caractérisé par le fait que** l'agent tensioactif est anionique, la partie anionique répondant à la formulé suivante:

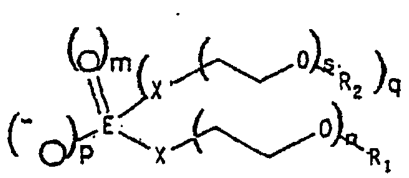

où q représente zéro ou 1 ;

où p représente un entier entre 1 et 2 (intervalles fermés c'est-à-dire comprenant les bornes) ;

où m représente zéro ou un entier entre 1 et 2 (intervalles fermés c'est-à-dire comprenant les bornes) ;

où X et X', semblables ou différents, représente un bras comportant au plus deux chaînons carbonés ;

où s est zéro ou un entier choisi entre 1 et 30 avantageusement entre 5 et 25, de préférence entre 9 et 20 (intervalles fermés c'est-à-dire comprenant les bornes);

où n est zéro ou un entier choisi entre 1 et 30 avantageusement entre 5 et 25, de préférence entre 9 et 20 (intervalles fermés c'est-à-dire comprenant les bornes) ; .

où E est le phosphore ;

où $R_1$et $R_2$, semblables ou différents, représentent un radical hydrocarboné, avantageusement choisi parmi les aryles et les alcoyles éventuellement substitués.

**29.** Utilisation d'un tensioactif ionique pour le blocage en émulsion d'isocyanates, **caractérisée par le fait que** ledit tensioactif comporte une partie hydrophile formée d'une fonction anionique choisie parmi les groupes phosphates, phosphonates et phosphinates et d'un fragment de chaîne polyéthylèneglycol et/ou polypropylèneglycol et une partie lipophile choisie parmi les groupes alcoyles et aryles.

**30.** Utilisation selon la revendication 29, **caractérisée par le fait qu'**elle comporte un composé comportant une fonction anionique et un fragment de chaîne polyéthylène glycol et/ou polypropylène glycol d'au moins 5, avantageusement d'au moins 7 unités éthylènyloxyles.

**31.** Utilisation selon les revendications 29 et 30, **caractérisée par le fait que** ledit composé comporte une partie

hydrophile formée de ladite fonction anionique, dudit éventuel fragment de chaîne polyéthylène gtycol et d'une partie lipophile à base d'un radical hydrocarboné.

**32.** Utilisation selon la revendication 31, **caractérisée par le fait que** ladite partie lipophile est choisie parmi les groupes alcoyles et aryles.

**33.** Utilisation selon la revendication 32, **caractérisée par le fait que** la partie anionique du composé tensioactif repond à la formule I suivante :

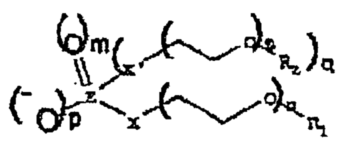

où q représente zéro ou 1 ;
où p représente un entier entre 1 et 2 (intervalles fermés c'est-à-dire comprenant les bornes);
où m représente zéro ou un entier entre 1 et 2 (intervalles fermés c'est-à-dire comprenant les bornes) ;
où X et X', semblables ou différents, représente un bras comportant, au plus deux chaînons carbonés ;
où s est zéro ou un entier choisi entre 1 et 30 avantageusement entre 5 et 25, de préférence, entre 9 et 20 (intervalles fermés c'est-à-dire comprenant les bornes) ;
où n est zéro ou un entier choisi entre 1 et 30 avantageusement entre 5 et 25, de préférence entre 9 et 20 (intervalles fermés c'est-à-dire comprenant les bornes) ;
où E est le phosphore ;
où $R_1$ et R2, semblables ou différents, représentent un radical hydrocarboné, avantageusement choisi parmi les aryles et les alcoyles éventuellement substitués.

**34.** Utilisation selon les revendications 29 à 33, **caractérisée par le fait que** le contre cation de l'agent tensioactif est une amine, avantageusement tertiaire.

**35.** Utilisation selon les revendications 29 à 34, **caractérisée par le fait que** ladite composition isocyanate comporte en moyenne 1 à 5 fonctions isocyanates par molécule porteuse de fonction(s) isocyanate(s).

**36.** Utilisation selon les revendications 29 à 35, **caractérisée par le fait que** ladite composition isocyanate comporte en moyenne 4/3 à 4 fonctions isocyanates par molécule porteuse de fonction(s) isocyanate(s).

**37.** Utilisation selon les revendications 29 à 36, **caractérisée par le fait que** ledit agent masquant présente au moins un hydrogène mobile.

**38.** Utilisation selon les revendications 29 à 37, **caractérisée par le fait que** ledit agent masquant présente au moins un hydrogène mobile et **par le fait que** le pKa des hydrogènes réactifs est au moins égal à 2, avantageusement à 3, de préférence à 5 et **par le fait que** ledit pKa est au plus égal à 11, avantageusement à 10, de préférence 9.

**39.** Utilisation selon les revendications 29 à 38, **caractérisée par le fait que** le pH de la phase aqueuse est maintenu pendant la durée de la réaction à une valeur au plus égale à 12, avantageusement à 11, de préférence à 10.

**40.** Utilisation selon les revendications 29 à 39, **caractérisée par le fait que** le pH de la phase aqueuse est maintenu pendant la durée de la réaction à une valeur au moins égale à la valeur (pKa -2), avantageusement au moins égale à la valeur (pKa -1), de préférence au moins égale à la valeur du pKa du, ou d'un des, agent(s) masquant(s).

**41.** Utilisation selon les revendications 29 à 40, **caractérisée par le fait que** le rapport massique entre le tensioactif et les isocyanates est inférieur à 20% et supérieur à 2 %, avantageusement compris entre 4 et 10 %.

**42.** Installation pour la mise en oeuvre du procédé selon l'une quelconque des revendications 16 à 41, **caractérisée en ce qu'**elle comprend au moins :

- un moyen de cisaillement, de préférence un broyeur, avantageusement un broyeur colloïdal susceptible de générer un taux de cisaillement (gradient de vitesse) supérieur à 1 000 $s^{-1}$, de préférence supérieur à 20 000 $s^{-1}$, et inférieur à 1 000 000 $s^{-1}$, de préférence inférieur à 200 000 $s^{-1}$, et
- des moyens d'injection d'une composition isocyanate dans une phase aqueuse, et éventuellement un ou plusieurs des moyens suivants :

- des moyens de recirculation de la phase aqueuse sous forme d'émulsion de polyisocyanate masqué ;
- des moyens de régulation du débit d'injection de la composition isocyanate dans la phase aqueuse ;
- des moyens d'homogénéisation dé l'émulsion ;
- des moyens de refroidissement du système ; et
- des moyens de soutirage de l'émulsion aqueuse de polyisocyanate masqué.

**43.** Installation selon la revendication 42, **caractérisée en ce que** le moyen de cisaillement est un broyeur colloïdal.

**44.** Installation selon la revendication 42 ou 43, **caractérisée en ce que** les moyens d'injection de la composition polyisocyanate comprennent :

- un bac de prémélange du polyisocyanate avec tout ou partie du tensioactif et/ou le solvant ; et
- une conduite d'arrivée de la composition polyisocyanate au contact de l'agent masquant.

**45.** Installation selon l'une quelconque des revendications 42 à 44, **caractérisée en ce que** les moyens de recirculation comprennent une boucle de recirculation.

**46.** Composition comportant une émulsion de polyisocyanate(s) masqué(s), **caractérisée en ce qu'**elle contient une partie hydrophile formée d'une fonction anionique choisie parmi les groupes phosphates, phosphonates et phosphinates et d'un fragment de chaîne polyéthylèneglycol et/ou polypropylène glycol et une partie lipophile choisie parmi les groupes alcoyles et aryles, et au fait que cette composition contient au plus 50% en poids d'eau par rapport au poids de l'émulsion.

**47.** Composition selon la revendication 46, **caractérisée en ce que** la quantité de polyisocyanate(s) masqué(s) dans l'émulsion représente au moins 55% en poids par rapport au poids total de l'émulsion.

**48.** Composition selon l'une dés revendications 46 ou 47, **caractérisée en ce que** ladite émulsion est formée de particules présentant un diamètre de Sauter inférieur ou égal à 5 µm et une largeur de dispersion inférieure ou égale à 5 µm.

**49.** Composition selon l'une quelconque des revendications 47 à 48, **caractérisée en ce qu'**elle comprend au plus 10% en poids d'agent tensioactif par rapport à la masse de la composition isocyanate.

**50.** Composition selon l'une quelconque des revendications précédentes, **caractérisée en ce que** l'agent tensioactif est tel que défini à la revendication 28.

**51.** Composition selon l'une quelconque dés revendications précédentes, **caractérisée en ce que** l'agent tensioactif répond à la formule suivante :

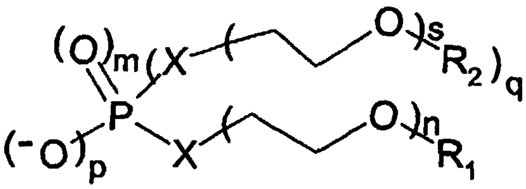

avec lorsque q est zéro :

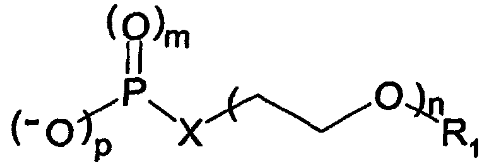

- où p représente zéro ou un entier entre 1 et 2 (intervalles fermés c'est-à-dire comprenant les bornes);
- où m représente zéro ou un entier entre 1 et 2 (intervalles fermés c'est-à-dire comprenant les bornes) ;
- où la somme p + m + q est au plus égale à trois ;
- où la somme 1 + p + 2m + q est égale à trois ou à cinq ;
- où X et X', semblables ou différents, représentent un bras comportant au plus deux chaînons carbonés ;
- où n et s, semblables ou différents, représentent un entier choisi entre 5 et 30 avantageusement entre 5 et 25, de préférence entre 9 et 20 (intervalles fermés c'est-à-dire comprenant les bornes);
- où $R_1$ et $R_2$, semblables ou différents, représentent un radical hydrocarboné.

**52.** Composition selon l'une quelconque des revendications 46 à 51, **caractérisée en ce qu'**elle présente une viscosité inférieure à 5500 mPa.s à au moins 68% d'extrait sec, à 25°C et avantageusement une viscosité inférieure à 1000 mPa.s à au moins 60% d'extrait sec, à 25°C.

**53.** Composition selon l'une des revendications 46 à 52, **caractérisée par le fait qu'**elle comporte en outre un catalyseur de libération avantageusement latent.

**54.** Composition selon l'une des revendications 46 à 53, **caractérisée par le fait qu'**elle comporte au moins un polyol.

**55.** Composition selon l'une des revendications 46 à 54, **caractérisée par le fait que** ledit polyol est un nanolatex dont le d80 est au plus égal à 1 micromètre.

**56.** Composition selon l'une des revendications 46 à 55, **caractérisée par le fait qu'**elle comporte une émulsion d'isocyanate dont le d80 est au plus égal à 10 micromètres.

**57.** Composition selon l'une des revendications 55 à 56, **caractérisée par le fait que** la teneur en eau est comprise entre 10 et 70% (émulsion huile dans eau).

**58.** Composition selon les revendications 46 à 57, **caractérisée par le fait que** la teneur en isocyanate + émulsifiant + alcool est comprise entre 30 et 70%.

**59.** Procédé pour la réalisation de revêtements, **caractérisé par le fait qu'**il comporte les étapes suivantes :

- application de la composition selon l'une des revendications 46 à 54 sous forme d'une couche d'épaisseur comprise entre 20 µm et 200 µm, et
- chauffage à une température au moins égale à 80°C.

**60.** Revêtement, **caractérisé par le fait qu'**il est susceptible d'être obtenu par mise en oeuvre du procédé selon la revendication 59.

## Claims

**1.** Process for synthesis in emulsion of masked (poly) isocyanates comprising the step consisting of:

a) contacting an isocyanate composition having free isocyanate functions with at least one masking agent A in the presence of a surfactant B and an aqueous phase, said isocyanate composition being progressively added to at least part of the aqueous phase and to at least part of the masking agent and in such a way that the free isocyanate function content is at the most equal to two equivalents per kg in the isocyanate phase.

**2.** Process according to claim 1 **characterized in that** said isocyanate composition has on average 1 to 5 isocyanate

functions per isocyanate function carrier molecule.

**3.** Process according to claims 1 and 2, **characterized in that** said isocyanate composition has on average 4/3 to 4 isocyanate functions per isocyanate function carrier molecule.

**4.** Process according to claims 1 to 3, **characterized in that** said masking agent has at least one mobile hydrogen.

**5.** Process according to claim 1 to 4, **characterized in that** said masking agent has at least one mobile hydrogen and **in that** the pKa of the reactive hydrogens is at least equal to 4, advantageously to 5 and preferably to 6 and **in that** said pKa is at the most equal to 14, advantageously 13, preferably 12 and in particularly preferred marmer 10, with the exclusion of lactams.

**6.** Process according to claims 1 to 5, **characterized in that** the pH of the aqueous is maintained throughout the reaction at a value at most equal to 12, advantageously 11 and preferably 10.

**7.** Process according to claims 1 to 6, **characterized in that** the pH of the aqueous phase is maintained throughout the reaction at a value at least equal to the value (pKa-2), advantageously at least equal to the value (pKa-1), preferably at least equal to the value of the pKa of the one or more masking agents.

**8.** Process according to claims 1 to 7, **characterized in** the the reaction is performed at a temperature at most equal to the cloud point temperature of the surfactant or surfactant mixture used.

**9.** Process according to claims 1 to 8, **characterized in that** said isocyanate composition has a solvent, including a mixture of solvents.

**10.** Process according to claims 1 to 9, **characterised in that** contacting takes place accompanied by stirring using a mixing device under conditions ensuriung that 90 mass %, advantageously 95 mass % of the particles have a size between 0.005 and 50 micrometers.

**11.** Process according to claim 10, **characterized in that** stirring is performed by means of a mixer-grinder.

**12.** Process according to claims 1 to 11 , **characterized in that** the reaction mixture undergoes recycling

**13.** Process according to claims 1 to 12, **characterized in that** the reaction mixture undergoes recycling during which the reaction mixture is subject to the action of a mixer-grinder.

**14.** Process according to claim 1 to 13, **characterized in that** said contacting is carried out by adding a reagent or reagents to at least one aqueous phase and to at least part of the masking agent or agents.

**15.** Process according to claims 1 to 14, **characterized in that** contacting is carried out by the addition of a reagent or reagents to a medium containing at least one aqueous phase, at least part of the surfactant or surfactants and at least part of the masking agent or agents.

**16.** Process according to at least one of the claim 1 to 15 also including the following steps:

b) subjecting the mixture obtained in a) to a shearing action (velocity gradient) above 1000 $s^{-1}$, preferably above 20,000 $s^{-1}$ and below 1, 000, 000 $s^{-1}$ and prefarably below 200,000 $s^{-1}$ and

c) repeating step b) , optionally after having repeated step a) until a stable emulsion is obtained, whose particles have a sauter diameter above 0.1 μm, preferably 0-2 μm and below 5 μm, preferably below 2 μm and a dispersion width below 5 μm.

**17.** Process accoraing to claim 16, **characterized in that** step c) is continued after the end of isocyanate composition addition.

**18.** Process according to claim 17, **characterized in that** step c) is performed by recycling the emulsion obtained at the end of step b).

**19.** Process according to any one of the claims 16 to 18, **characterized in that** the reaction mixture undergoes recycling in a colloidal grinder.

**20.** Process according to claim 19, **characterized in that** the aqueous phase to which has been added the isocyanate composition optionally containing the surfactant and/or a solvent undergoes a first shearing action (velocity gradient) below 20,000 $s^{-1}$, preferably 10,000 $s^{-1}$ after contacting with the masking agent and prior to the high shear step b) .

**21.** Process according to any one of the claims 1 to 20, **characterized in that** it is performed at a temperature below 50°C, preferably below 40°C.

**22.** Process according to any one of the claims 1 to 21, **characterized in that** the surfactant is added, to the isocyanate composition in a proportion below 20 wt-%, preferably below 10 wt-%, based on the weight of the isocyanate composition to be masked.

**23.** Process according to claims 1 to 22, **characterized, in that** staid surfactant is an agent having an ionic function.

**24.** Process according to claims 1 to 23, **characterized in that** said surfactant is an anionic agent having at least one function chosen from among aryl and/or alkyl phosphates and aryl or alkyl phosphonate and phosphinate.

**25.** Process according to claims 1 to 24, **characterized, in that** the surfactant in a compound having anionic function and a polyethylene glycol and/or propylene glycol chain fragment of at least 1, advantageously at least 5 and preferably at least 7 ethylenyloxyl and/or propylenyloxyl units

**26.** Process according to claims 1 to 25, **characterized in that** said compound has a hydrophilic part formed by said anionic function of said polyethylene glycol and/or polypropylene glycol chain fragment and a lipophilic part based on a hydrocarbon radical.

**27.** Process according to claim 26, **characterized in that** said lipophilic part is chosen from among alkyl and aryl groups.

**28.** Process according to claims 1 to 27, **characterized in that** the surfactant is anionic, the anionic part complying with the following formula :

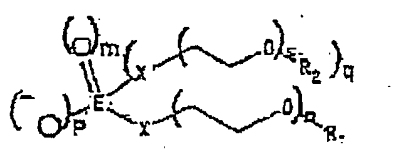

where q represents 0 or 1,
where p represents an integer between 1 and 2 (closed intervals, i.e. having limits),
where m represents zero or an integer between 1 and 2 (closed intervals, i.e. having limits) ,
where X and X' , which can be the same or different represent an arm having at the most two carbon groups,
where s is zero or an integer chosen between 1 and 30, advantageously between 5 and 25, preferably between 9 and 20 (cloned intervals, i.e.having limits).
where n is zero or an integer chosen between 1 and 30, advantageously between 5 and 25, preferably between 9 and 20 [closed intervals, i.e. having limits) ,
where E is phosphorus,
where $R_1$ and $R_2$, which can be the same or different, represent a hydrocarbon radical, advantageously chosen from among optionally substituted aryls and alkyls.

**29.** Use of an ionic surfactant for blocking isocyanates in emulsion, **characterized in that** said surfactant has a hydrophilc part formed by an anionic function chosen from among phosphate, phosphonate and phosphinate groups and a polyethylene glycol and/or polypropylene glycol chain fragment and a lipophillic part chosen from among alkyl and aryl groups.

**30.** use according to claim 29, **characterized in that** it has a compound having an anionic function and a polyethylene glycol and/or polypropylene glycol chain fragment of at least 5 and advantageously at least 7 ethylenyoxyl units.

**31.** use according to claims 29 and 30, **characterized in that** said compound has a hydrophilic part formed by said anionic function, said optional polyethylene glycol chain fragment and alipophilicpart based on a hydrocarbon radical

**32.** use according to claim 31, **characterized in that** said lipophilic part is chosen from among alkyl and aryl groups.

**33.** Use according to claim 32, **characterized in that** the anionic part of the surfactant complies with, the following formula:

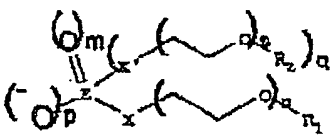

where q represents zero or 1,
where p represents an integer between 1 and 2 (closed intervals, i.e having limits,
where m represents zero or an integer between 1 and 2 (closed intervals, i.e. having limits),
where X and X', which can be the same or different, represent an arm having at the most two carbon groups,
where s is zero or an integer chosen between 1 and 30, adventageously between 5 and 25 and preferably between 9 and 20 (closed intervals, i.e. having limits),
where n is zero or an integer chosen between 1 and 30, advantageously between 5 and 25 and preferably between 9 and 20 (closed intervals,i e. having limits),
where E is phosphorus,
where $R_1$ and $R_2$, which can be the same or different,represent a hydrocarbon radical, advantageously chosen from among optionally substituted aryls and alkyls.

**34.** Use according to claims 29 to 33, **characterized in that** the countercation of the surfactant is an amine,advantageously a tertiary amine

**35.** Use according to claims 20 to 34, **characterized in that**, said isocyanate composition has on average 1 to 5 isocyanate functions per isocyanate function carrier molecule.

**36.** Use according to claims 29 to 35, **characterized in that** said isocyanate composition has on average 4/3 to 4 isocyanate functions per isocyanate function carrier molecule.

**37.** Use according to claims 29 to 36, **characterized in that** said masking agent has at least one mobile hydrogen.

**38.** Use according to claims 29 to 37, **characterized in that** said masking agent has at least one mobile hydrogen and **in that** the pKa of the reactive hydrogen is at least equal to 2, advantageously to 3, preferably to 5 and **in that** said pKa is at the most equal to 11, advantageously to 10 and preferably to 9.

**39.** Use according to claims 29 to 38, **characterized in that** the pH of the aqueous phase is maintained throughout the reaction at a value at most equal to 12, advantageously to 11 and preferably to 10.

**40.** Use according to claims 23 to 39, **characterized in that** the pH of the aqueous phase is maintained throughout the reaction at a value at least equal to the value (pKa-2), advantageously at least equal to the value (pKa-1), preferably at least equal to the valne of the pka of the masking agent or one of the masking agents.

**41.** Use According to claims 29 to 40, **characterized in that** the mass ratio between the surfactant and the isocyanates is below 20% and above 2%, advantageously being between 4 and 10%.

**42.** Installation for performing the process according to any one of the claims 16 to 41, **characterized in that** it comprises at least:

- a shearing means, preferably a grinder, advantageously a colloidal grinder able to produce a shear rate (velocity gradient) above 1000 $s^{-1}$, preferably above 20,000 $s^{-1}$ and below 1,000,000 $s^{-1}$, preferably below 200, 000 $s^{-1}$ and
- means for injecting an isocyanate composition into an aqueous phase and optionally one or more of the following means:
    - means for recycling the aqueous phase in the form of a masked polyisocyanate emulsion,
    - means for regulating the rate of injection of the isocyanate composition into the aqueous phase.
    - means for homogenizing the emulsion,
    - means for cooling the system and
    - means for drawing off the aqueous masked polyisocyanate emulsion.

**43.** Installation according to claim 42, **characterized in that** the shearing means is a colloidal grinder.

**44.** Installation according to claim 42 or 43, **characterized in that** the polyisocyanate composition injection means comprise:

- a tank for premixing the polysocyanate with all or part of the surfactant and/or the solvent and
- a pipe for admitting the polyisocyanate composition in contact with the masking agent.

**45.** Installation according to one of the claims 42 to 44, **characterized in that** the recycling means comprise a recycling loop.

**46.** Composition incorporating a mask polyisocyanate emulsion, **characterized in that** it contains a hydrophilic part formed by an anionic function chosen from among phosphate, phosphonate and phosphinate groups and a polyethylene glycol and/or polypropylene glycol chain fragment and a lipophilic part chosen from among alkyl and aryl groups, and is that said composition contains at the most 50 wt. % water, based on the weight of the emulsion.

**47.** Composition according to claim 46, **characterized in that** the masked polyisocyanate quantity in the emulsion, represents at least 55 wt. % based on the total weight of the emulsion.

**48.** Composition according to either of the claims 46 or 47, **characterized in that** said emulsion is formed from particles having a Sauter diameter equal to or below 5 µm and a dispersion width equal to or below 5 µm.

**49.** Composition according to either of the claims 47 and 48, **characterized in that** it comprises at the most 10 wt.% surfactant based on the mass of the isocyanate composition.

**50.** Composition according to any one of the preceding claims, **characterized in that** the surfactant is as defined in claim 28.

**51.** Composition according to any one of the preceding claims,**characterized in that** the surfactant complies with the following formula:

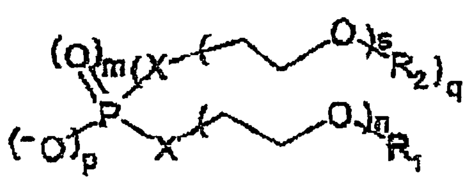

with when q is zero:

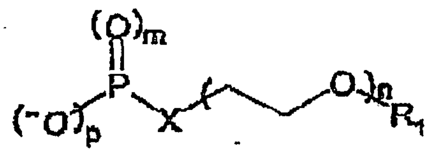

where p represents zero or an integer between 1 and 2 (closed intervals, i.e. having limits), where m represents zero or an integer between 1 and 2 (closed intervals, i.e. having limits), where the sum p+m+q is at the most equal to three, where the sum 1+p+2m+q is equal to three or to five, where X and X', which can be the same or different, represent an arm having at the most two carbon groups, where n and s, which can be the same or different, represent an integer chosen between 5 and 30, advantageously between 5 and 25, preferably between 9 and 20 (closed intervals. i.e. having limits), where $R^1$ and $R^2$, which can be the same or different, represent a hydrocarbon radical.

**52.** Composition according to any one of the claims 46 to 51, **characterized in that** it has a viscosity below 5500 mPa.s at at least 68% dry extract at 25°C and advantageously a viscosity below 1000 mPa.s at at least 60% dry extract at 25°C.

**53.** Composition according to one of the claims 46 to 52, **characterized in that** it also has an advantageously latent release catalyst.

**54.** Composition according to one of the claims 46 to 53, **characterized in that** it has at least one polyol.

**55.** Composition according to one of the claims 46 to 54, **characterized in that** said polyol is a nanolatex, whereof the d80 is at the most equal to 1 micrometer.

**56.** Composition according to one of the claims 46 to 55, **characterized in that** it has an isocyanate emulsion, whereof the d80 is at the most equal to 10 micrometers.

**57.** Composition according to either of the claims 55 and 56, **characterized in that** the water content is between 10 and 70% (oil-in-water emulsion).

**58.** Composition according to claims 46 to 57, **characterized in that** the content of isocyanate + emulsifier + alcohol is between 30 and 70%.

**59.** Process for producing coatings, **characterized in, that** it has the following steps:

- application of the composition according to one off the claims 46 to 54 in the form of a layer of thickness between 20 and 200 µm and
- heating to a temperature at least equal to 80°C.

**60.** Coating, **characterized in that** it can be obtained, by implementing the process according to claim 59.

**Patentansprüche**

**1.** Verfahren zur Synthese maskierter (Poly)Isocyanate in Emulsion, umfassend den Schritt bestehend aus:

a) Zusammenbringen einer freie Isocyanatfunktionen aufweisenden Isocyanatzusammensetzung mit wenigstens einem Maskierungsmittel A in Gegenwart eines Tensids B und einer wäßrigen Phase, wobei die Isocyanatzusammensetzung nach und nach zu mindestens einem Teil der wäßrigen Phase und mindestens einem Teil des Maskierungsmittels und auf eine solche Weise zugefügt wird, daß der Gehalt an freien Isocyanatfunktionen in der Isocyanatphase größer als 2 Äquivalente je kg ist.

**2.** Verfahren gemäß Anspruch 1, **dadurch gekennzeichnet, daß** bei der eine Isocyanatfunktion aufweisenden Zusammensetzung ein (eine) Isocyanatfunktion(en) tragendes Molekül im Mittel 1 bis 5 Isocyanatfunktionen umfaßt.

**3.** Verfahren gemäß den Ansprüchen 1 und 2, **dadurch gekennzeichnet, daß** bei der eine Isocyanatfunktion aufweisenden Zusammensetzung ein (eine) Isocyanatfunktion(en) tragendes Molekül im Mittel 4/3 bis 4 Isocyanatfunktionen umfaßt.

**4.** Verfahren gemäß den Ansprüchen 1 bis 3, **dadurch gekennzeichnet, daß** das Maskierungsmittel mindestens einen beweglichen Wasserstoff aufweist.

**5.** Verfahren gemäß den Ansprüchen 1 bis 4, **dadurch gekennzeichnet, daß** das Maskierungsmittel mindestens einen beweglichen Wasserstoff aufweist und dadurch, daß der pKa der reaktionsfähigen Wasserstoffe mindestens 4, vorteilhafterweise 5 und bevorzugt 6 ist und dadurch, daß der pKa größer als 14, vorteilhafterweise 13, bevorzugt 12 und bevorzugter 10 ist, wobei Lactame ausgeschlossen sind.

**6.** Verfahren gemäß den Ansprüchen 1 bis 5, **dadurch gekennzeichnet, daß** der pH der wäßrigen Phase während der Reaktionsdauer bei einem größeren Wert als 12, vorteilhafter 11 und vorzugsweise 10 gehalten wird.

**7.** Verfahren gemäß den Ansprüchen 1 bis 6, **dadurch gekennzeichnet, daß** der pH der wäßrigen Phase während der Reaktionsdauer bei mindestens dem Wert (pKa-2), vorteilhafterweise mindestens dem Wert (pKa-1), bevorzugt mindestens dem pKa-Wert des oder eines der Maskierungsmittel(s) gehalten wird.

**8.** Verfahren gemäß den Ansprüchen 1 bis 7, **dadurch gekennzeichnet, daß** die Reaktion bei einer Temperatur über dem Trübungspunkt des verwendeten Tensids oder Tensidgemisches ausgeführt wird.

**9.** Verfahren gemäß den Ansprüchen 1 bis 8, **dadurch gekennzeichnet, daß** die eine Isocyanatfunktion aufweisende Zusammensetzung ein Lösungsmittel umfaßt, wobei ein Lösungsmittelgemisch inbegriffen ist.

**10.** Verfahren gemäß den Ansprüchen 1 bis 9, **dadurch gekennzeichnet, daß** das Zusammenbringen unter Rühren mittels einer Mischvorrichtung unter Bedingungen durchgeführt wird, bei denen sichergestellt ist, daß 90 Gew.-%, vorteilhafterweise 95 Gew.-% der Teilchen von einer Größe zwischen 0,005 und 50 Mikrometer sind.

**11.** Verfahren gemäß Anspruch 10, **dadurch gekennzeichnet, daß** das Rühren mittels eines Mischzerkleinerers ausgeführt wird.

**12.** Verfahren gemäß den Ansprüchen 1 bis 11, **dadurch gekennzeichnet, daß** das Reaktionsgemisch einer Rückführung unterzogen wird.

**13.** Verfahren gemäß den Ansprüchen 1 bis 12, **dadurch gekennzeichnet, daß** das Reaktionsgemisch einer Rückführung unterzogen wird, während derer das Reaktionsgemisch der Wirkung eines Mischzerkleinerers unterzogen wird.

**14.** Verfahren gemäß den Ansprüchen 1 bis 13, **dadurch gekennzeichnet, daß** das Zusammenbringen durch Zugabe eines Reagenzes (von Reagenzien) zu wenigstens einer wäßrigen Phase und wenigstens einem Teil des (der) Maskierungsmittel(s) durchgeführt wird.

**15.** Verfahren gemäß den Ansprüchen 1 bis 14, **dadurch gekennzeichnet, daß** das Zusammenbringen durch Zugabe eines Reagenzes (von Reagenzien) zu einem wenigstens eine wäßrige Phase, wenigstens einen Teil des (der) Tensids (Tenside) und wenigstens einen Teil des (der) Maskierungsmittel(s) enthaltenden Medium durchgeführt wird.

**16.** Verfahren gemäß einem der Ansprüche 1 bis 15, das außerdem die Schritte umfaßt, bestehend aus:

b) dem Unterziehen des in a) erhaltenen Gemisches einem Scheren (Geschwindigkeitsgefälle) über 1000 $s^{-1}$, bevorzugt über 20 000 $s^{-1}$ und unter 1 000 000 $s^{-1}$ und bevorzugt unter 200 000 $s^{-1}$ und

c) dem Wiederholen von Schritt b) gegebenenfalls nachdem Schritt a) wiederholt worden ist, bis zum Erhalt einer stabilen Emulsion, deren Teilchen einen Sauter-Durchmesser über 0,1 µm, vorzugsweise 0,2 µm und unter 5 µm, bevorzugt unter 2 µm und eine Dispersionsbreite unter 5 µm aufweisen.

**17.** Verfahren gemäß Anspruch 16, **dadurch gekennzeichnet, daß** Schritt c) nach dem Ende der Zugabe der Isocyanatzusammensetzung durchgeführt wird.

**18.** Verfahren gemäß Anspruch 17, **dadurch gekennzeichnet, daß** Schritt c) durch Rückführung der am Ende von Schritt b) erhaltenen Emulsion ausgeführt wird.

**19.** Verfahren gemäß einem der Ansprüche 16 bis 18, **dadurch gekennzeichnet, daß** das Reaktionsgemisch einer Rückführung in einer Kolloidmühle unterzogen wird.

**20.** Verfahren gemäß Anspruch 19, **dadurch gekennzeichnet, daß** die der Isocyanatzusammensetzung zugefügte wäßrige Phase, die gegebenenfalls das Tensid und/oder ein Lösungsmittel enthält, nachdem sie mit dem Maskierungsmittel zusammengebracht worden ist und vor dem Schritt b) des starken Scherens einem ersten Scheren (Geschwindigkeitsgefälle) unter 20 000 $s^{-1}$, bevorzugt unter 10 000 $s^{-1}$ unterzogen wird.

**21.** Verfahren gemäß einem der Ansprüche 1 bis 20, **dadurch gekennzeichnet, daß** es bei einer Temperatur unter 50°C, bevorzugt unter 40°C durchgeführt wird.

**22.** Verfahren gemäß einem der Ansprüche 1 bis 21, **dadurch gekennzeichnet, daß** das Tensid der Isocyanatzusammensetzung in einem Anteil von unter 20 Gew.-%, bevorzugt unter 10 Gew.-% bezogen auf das Gewicht der zu maskierenden Isocyanatzusammensetzung zugefügt wird.

**23.** Verfahren gemäß den Ansprüchen 1 bis 22, **dadurch gekennzeichnet, daß** das Tensid ein Mittel ist, das eine anionische Funktion aufweist.

**24.** Verfahren gemäß den Ansprüchen 1 bis 23, **dadurch gekennzeichnet, daß** das Tensid ein anionisches Mittel ist, das mindestens eine aus den Aryl- und/oder Alkylphosphaten und den Aryl- oder Alkylphosphonaten und -phosphinaten ausgewählte Funktion aufweist.

**25.** Verfahren gemäß den Ansprüchen 1 bis 24, **dadurch gekennzeichnet, daß** das Tensid eine Verbindung ist, die eine anionische Funktion und ein Fragment einer Polyethylenglykol- und/oder Polypropylenglykolkette aus mindestens 1, vorteilhafterweise mindestens 5, bevorzugt mindestens 7 Ethylenoxy- und/oder Propylenoxyeinheiten umfaßt.

**26.** Verfahren gemäß den Ansprüchen 1 bis 25, **dadurch gekennzeichnet, daß** die Verbindung einen hydrophilen Teil, der durch die anionische Funktion, das Fragment der Polyethylenglykol- und/oder Polypropylenglykolkette gebildet wird, und einen auf einem Kohlenwasserstoffrest beruhenden lipophilen Teil umfaßt.

**27.** Verfahren gemäß dem Anspruch 26, **dadurch gekennzeichnet, daß** der lipophile Teil aus Alkyl- und Arylgruppen ausgewählt ist.

**28.** Verfahren gemäß den Ansprüchen 1 bis 27, **dadurch gekennzeichnet, daß** das Tensid anionisch ist, wobei der anionische Teil der folgenden Formel entspricht:

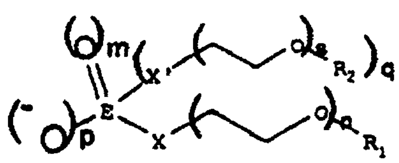

worin q null oder 1 darstellt;
worin p eine ganze Zahl zwischen 1 und 2 darstellt (geschlossene Intervalle, das heißt die Grenzen umfassend);
worin m null oder eine ganze Zahl zwischen 1 und 2 darstellt (geschlossene Intervalle, das heißt die Grenzen umfassend);
worin X und X', die gleich oder verschieden sind, einen Seitenarm darstellen, der mehr als zwei Kohlenstoffketten umfaßt;
worin s null oder eine zwischen 1 und 30, vorteilhafterweise zwischen 5 und 25, bevorzugt zwischen 9 und 20 (geschlossene Intervalle, das heißt die Grenzen umfassend) ausgewählte ganze Zahl ist;

worin n null oder eine zwischen 1 und 30, vorteilhafterweise zwischen 5 und 25, bevorzugt zwischen 9 und 20 (geschlossene Intervalle, das heißt die Grenzen umfassend) ausgewählte ganze Zahl ist;
worin E Phosphor ist und
worin $R_1$ und $R_2$, die gleich oder verschieden sind, einen Kohlenwasserstoffrest darstellen, der vorteilhafterweise unter gegebenenfalls substituiertem Aryl und Alkyl ausgewählt ist.

**29.** Verwendung eines ionischen Tensids zum Blockieren von Isocyanaten in Emulsion, **dadurch gekennzeichnet, daß** das Tensid einen hydrophilen Teil, der aus einer anionischen Funktion, die aus Phosphat-, Phosphonat- und Phosphinatgruppen ausgewählt ist, und einem Fragment einer Polyethylenglykolund/öder Polypropylenglykolkette gebildet ist, und einen lipophilen Teil umfaßt, der aus Alkyl- und Arylgruppen ausgewählt ist.

**30.** Verwendung gemäß Anspruch 29, **dadurch gekennzeichnet, daß** sie eine Verbindung umfaßt, die eine anionische Funktion und ein Fragment einer Polyethylenglykol- und/oder Polypropylenglykolkette aus mindestens 5, vorteilhafterweise mindestens 7 Ethylenoxyeinheiten umfaßt.

**31.** Verwendung gemäß den Ansprüchen 29 und 30, **dadurch gekennzeichnet, daß** die Verbindung einen hydrophilen Teil, der aus der anionischen Funktion und dem möglichen Fragment der Polyethylenglykolkette gebildet ist, und einen auf einem Kohlenwasserstoffrest beruhenden, lipophilen Teil umfaßt.

**32.** Verwendung gemäß Anspruch 31, **dadurch gekennzeichnet, daß** der lipophile Teil aus Alkyl- und Arylgruppen ausgewählt ist.

**33.** Verwendung gemäß Anspruch 32, **dadurch gekennzeichnet, daß** der anionische Teil der Tensidverbindung der folgenden Formel I entspricht:

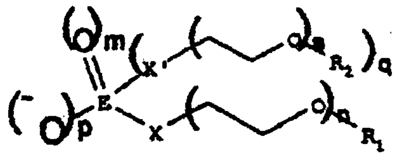

worin q null oder 1 darstellt;
worin p eine ganze Zahl zwischen 1 und 2 darstellt (geschlossene Intervalle, das heißt die Grenzen umfassend);
worin m null oder eine ganze Zahl zwischen 1 und 2 darstellt (geschlossene Intervalle, das heißt die Grenzen umfassend);
worin X und X', die gleich oder verschieden sind, einen Seitenarm darstellen, der mehr als zwei Kohlenstoffketten umfaßt;
worin s null oder eine zwischen 1 und 30, vorteilhafterweise zwischen 5 und 25, bevorzugt zwischen 9 und 20 (geschlossene Intervalle, das heißt die Grenzen umfassend) ausgewählte ganze Zahl ist;
worin n null oder eine zwischen 1 und 30, vorteilhafterweise zwischen 5 und 25, bevorzugt zwischen 9 und 20 (geschlossene Intervalle, das heißt die Grenzen umfassend) ausgewählte ganze Zahl ist;
worin E Phosphor ist und
worin $R_1$ und $R_2$, die gleich oder verschieden sind, einen Kohlenwasserstoffrest darstellen, der vorteilhafterweise unter gegebenenfalls substituiertem Aryl und Alkyl ausgewählt ist.

**34.** Verwendung gemäß den Ansprüchen 29 bis 33, **dadurch gekennzeichnet, daß** das Gegenkation des Tensids ein vorteilhafterweise tertiäres Amin ist.

**35.** Verwendung gemäß den Ansprüchen 29 bis 34, **dadurch gekennzeichnet, daß** bei der eine Isocyanatfunktion aufweisenden Zusammensetzung ein (eine) Isocyanatfunktion(en) aufweisendes Molekül im Mittel 1 bis 5 Isocyanatfunktionen trägt.

**36.** Verwendung gemäß den Ansprüchen 29 bis 35, **dadurch gekennzeichnet, daß** bei der eine Isocyanatfunktion aufweisenden Zusammensetzung ein (eine) Isocyanatfunktion(en) aufweisendes Molekül im Mittel 4/3 bis 4 Isocyanatfunktionen trägt.

**37.** Verwendung gemäß den Ansprüchen 29 bis 36, **dadurch gekennzeichnet, daß** das Maskierungsmittel mindestens einen beweglichen Wasserstoff aufweist.

**38.** Verwendung gemäß den Ansprüchen 29 bis 37, **dadurch gekennzeichnet, daß** das Maskierungsmittel mindestens einen beweglichen Wasserstoff aufweist und dadurch, daß der pKa der reaktionsfähigen Wasserstoffe mindestens 2, vorteilhafterweise 3 und bevorzugt 5 ist und dadurch, daß der pKa größer als 11, vorteilhafterweise 10 und bevorzugt 9 ist.

**39.** Verwendung gemäß den Ansprüchen 29 bis 38, **dadurch gekennzeichnet, daß** der pH der wäßrigen Phase während der Reaktionsdauer bei einem größeren Wert als 12, vorteilhafterweise 11 und bevorzugt 10 gehalten wird.

**40.** Verwendung gemäß den Ansprüchen 29 bis 39, **dadurch gekennzeichnet, daß** der pH der wäßrigen Phase während der Reaktionsdauer bei mindestens dem Wert (pKa-2), vorteilhafterweise mindestens dem Wert (pKa-1), bevorzugt mindestens dem pKa-Wert des oder eines der Masklerungsmittel(s) gehalten wird.

**41.** Verwendung gemäß den Ansprüchen 29 bis 40, **dadurch gekennzeichnet, daß** das Gewichtsverhältnis zwischen dem Tensid und den Isocyanaten unter 20% und über 2%, vorteilhafterweise zwischen 4 und 10% beträgt.

**42.** Vorrichtung zur Durchführung des Verfahrens gemäß einem der Ansprüche 16 bis 41, **dadurch gekennzeichnet, daß** sie mindestens

- ein Schermittel, vorzugsweise eine Mühle, vorteilhafterweise eine Kolloidmühle, die ein Schergefälle (Geschwindigkeitsgefälle) über 1000 $s^{-1}$, bevorzugt über 20 000 $s^{-1}$ und unter 1 000 000 $s^{-1}$ und bevorzugt unter 200 000 $s^{-1}$ erzeugen kann, und
- Mittel zum Einspritzen einer Isocyanatzusammensetzung in eine wäßrige Phase und gegebenenfalls ein oder mehrere folgende Mittel umfaßt:

- Mittel zum Rückführen der wäßrigen Phase in Form einer Emulsion aus maskiertem Polyisocyanat;
- Mittel zum Steuern der Einspritzrate der Isocyanatzusammensetzung in die wäßrige Phase;
- Mittel zur Homogenisierung der Emulsion;
- Mittef zur Kühlung des Systems und
- Mittel zum Austrag der wäßrigen Emulsion des maskierten Polyisocyanats.

**43.** Vorrichtung gemäß Anspruch 42, **dadurch gekennzeichnet, daß** das Schermittel eine Kolloidmühle ist.

**44.** Vorrichtung gemäß Anspruch 42 oder 43, **dadurch gekennzeichnet, daß** die Mittel zum Einspritzen der Polyisocyanatzusammensetzung

- einen Behälter zum Vormischen des Polyisocyanats mit dem ganzen oder einem Teil des Tensids und/oder dem Lösungsmittel und
- eine Zuführungsleitung für die Polyisocyanatzusammensetzung zum Kontakt mit dem Maskierungsmittel umfassen.

**45.** Vorrichtung gemäß einem der Ansprüche 42 bis 44, **dadurch gekennzeichnet, daß** die Mittel zur Rückführung eine Rückführschleife enthalten.

**46.** Zusammensetzung umfassend eine Emulsion aus maskiertem (maskierten) Polyisocyanat(en), **dadurch gekennzeichnet, daß** sie einen hydrophilen Teil, der aus einer anionischen Funktion, die aus Phosphat-, Phosphonat- und Phosphinatgruppen ausgewählt ist, und einem Fragment einer Polyethylenglykolund/oder Polypropylenglykolkette gebildet ist, und einen lipophilen Teil, der aus Alkyl- und Arylgruppen ausgewählt ist, enthält und dadurch, daß diese Zusammensetzung mehr als 50 Gew.-% Wasser bezogen auf das Gewicht der Emulsion enthält.

**47.** Zusammensetzung gemäß Anspruch 46, **dadurch gekennzeichnet, daß** die Menge des (der) maskierten Polyisocyanats (Polyisocyanate) in der Emulsion mindestens 55 Gew.-% bezogen auf das Gesamtgewicht der Emulsion beträgt.

**48.** Zusammensetzung gemäß einem der Ansprüche 46 oder 47, **dadurch gekennzeichnet, daß** die Emulsion aus Teilchen gebildet ist, die einen Sauter-Durchmesser von 5 μm oder kleiner und eine Dispersionsbreite von 5 μm oder kleiner aufweisen.

**49.** Zusammensetzung gemäß einem der Ansprüche 47 bis 48, **dadurch gekennzeichnet, daß** sie mehr als 10 Gew.-% Tensid bezogen auf das Gewicht der Isocyanatzusammensetzung umfaßt.

**50.** Zusammensetzung gemäß einem der vorangehenden Ansprüche, **dadurch gekennzeichnet, daß** das Tensid wie in Anspruch 28 definiert ist.

**51.** Zusammensetzung gemäß einem der vorangehenden Ansprüche, **dadurch gekennzeichnet, daß** das Tensid der folgenden Formel entspricht:

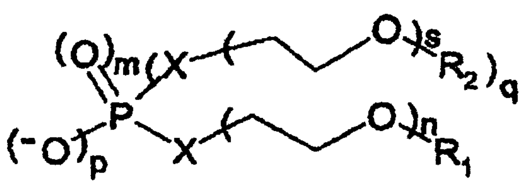

und wenn q null ist:

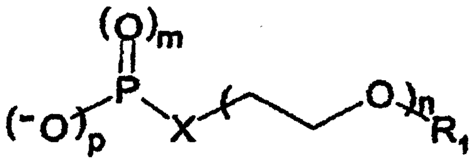

worin p null oder eine ganze Zahl zwischen 1 und 2 darstellt (geschlossene Intervalle, das heißt die Grenzen umfassend);
worin m null oder eine ganze Zahl zwischen 1 und 2 darstellt (geschlossene Intervalle, das heißt die Grenzen umfassend);
worin die Summe p + m + q größer als 3 ist;
worin die Summe 1 + p + 2m + q drei oder fünf ist;
worin X und X', die gleich oder verschieden sind, einen Seitenarm darstellen, der mehr als zwei Kohlenstoffketten umfaßt;
worin n und s, die gleich oder verschieden sind, eine zwischen 5 und 30, vorteilhafterweise zwischen 5 und 25, bevorzugt zwischen 9 und 20 (geschlossene Intervalle, das heißt die Grenzen umfassend) ausgewählte ganze Zahl darstellen und
worin $R_1$ und $R_2$, die gleich oder verschieden sind, einen Kohlenwasserstoffrest darstellen.

**52.** Zusammensetzung gemäß einem der Ansprüche 46 bis 51, **dadurch gekennzeichnet, daß** sie eine Viskosität unter 5500 mPa.s mit weniger als 68% Trockenextrakt bei 25°C und vorteilhafterweise eine Viskosität unter 1000 mPa.s mit weniger als 60% Trockenextrakt bei 25°C aufweist.

**53.** Zusammensetzung gemäß einem der Ansprüche 46 bis 52, **dadurch gekennzeichnet, daß** sie außerdem einen vorteilhafterweise latenten Freisetzungskatalysator umfaßt.

**54.** Zusammensetzung gemäß einem der Ansprüche 46 bis 53, **dadurch gekennzeichnet, daß** sie wenigstens ein Polyol umfaßt.

**55.** Zusammensetzung gemäß einem der Ansprüche 46 bis 54, **dadurch gekennzeichnet, daß** das Polyol ein Nanolatex ist, dessen d80 über 1 Mikrometer beträgt.

**56.** Zusammensetzung gemäß einem der Ansprüche 46 bis 55, **dadurch gekennzeichnet, daß** sie eine Isocyanatemulsion umfaßt, deren d80 größer als 10 Mikrometer ist.

**57.** Zusammensetzung gemäß einem der Ansprüche 55 bis 56, **dadurch gekennzeichnet, daß** der Wassergehalt zwischen 10 und 70% (Öl-in-Wasser-Emulsion) beträgt.

**58.** Zusammensetzung gemäß einem der Ansprüche 46 bis 57, **dadurch gekennzeichnet, daß** der Gehalt an Isocyanat + Emulgator + Alkohol zwischen 30 und 70% beträgt.

**59.** Verfahren zur Durchführung von Beschichtungen, **dadurch gekennzeichnet, daß** es die folgenden Schritte umfaßt:

- Aufbringen der Zusammensetzung gemäß einem der Ansprüche 46 bis 54 in Form einer Schicht mit einer Dicke zwischen 20 µm und 200 µm und
- Erhitzen auf eine Temperatur von mindestens 80°C.

**60.** Beschichtung, **dadurch gekennzeichnet, daß** sie durch Ausführen des Verfahrens gemäß Anspruch 59 erhalten werden kann.

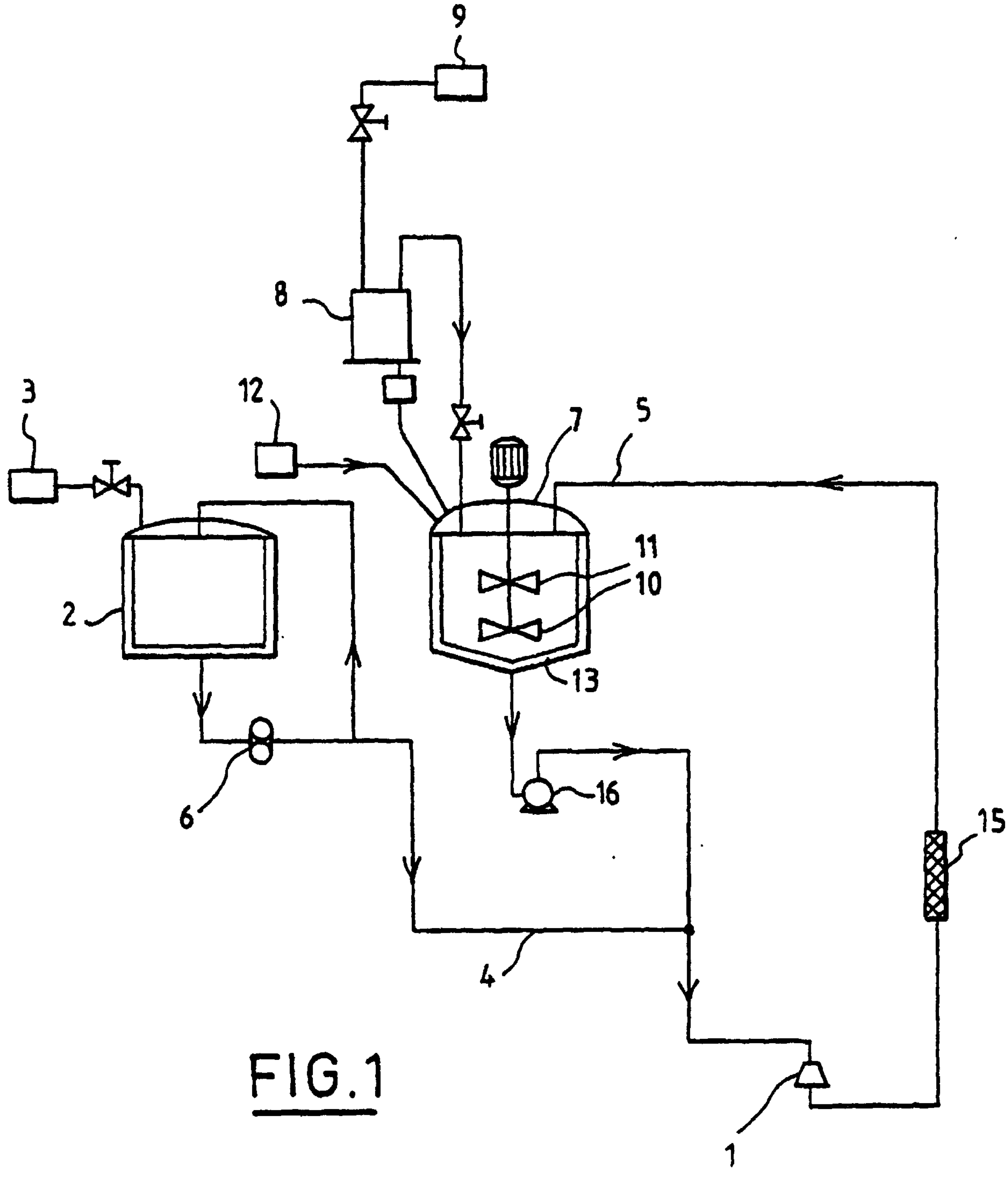


FIG.1

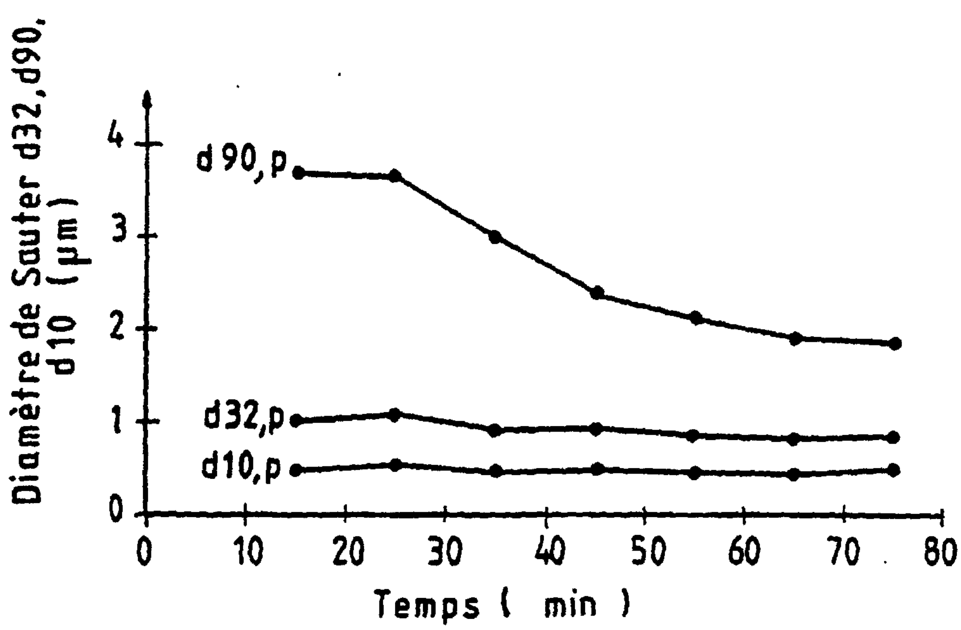
Diamètre de Sauter d32, d90, d10 (µm)
4
3
2
1
0
d 90,p
d32,p
d10,p
0
10
20
30
40
50
60
70
80
Temps ( min )

FIG. 2